# EUROPEAN PATENT APPLICATION

(11) **EP 4 715 934 A1**
(43) Date of publication of application: **25.03.2026**
(21) Application number: 23938853.1
(22) Date of filing: 31.05.2023
(51) Int. Cl.: H01M 10/0567

(54) **NON-AQUEOUS ELECTROLYTE, SECONDARY BATTERY, AND ELECTRICAL DEVICE**

(71) Applicant: Contemporary Amperex Technology Co., Limited, Ningde, Fujian 352100 (CN)
(72) Inventor: ZHANG, Limei, Ningde, Fujian 352100 (CN); CHEN, Peipei, Ningde, Fujian 352100 (CN); LIU, Jiao, Ningde, Fujian 352100 (CN); REN, Jiamo, Ningde, Fujian 352100 (CN)
(74) Representative: Gong, Jinping
(86) International application number: PCT/CN2023/097474
(87) International publication number: WO 2024/243862

(57) **Abstract**

The present application provides a non-aqueous electrolyte solution, a secondary battery and an electrical apparatus. The non-aqueous electrolyte solution includes additives, the additives include a first additive and a second additive, in which, the first additive is any one or more cyclic sulfate compounds having a structure shown in a general formula (I), and the second additive is any one or more cyclic carbonate compounds having a structure shown in a general formula (III) or general formula (IV),

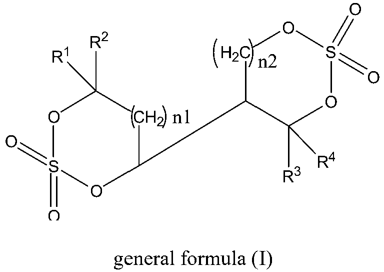

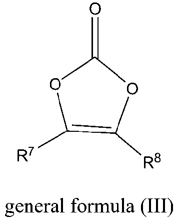

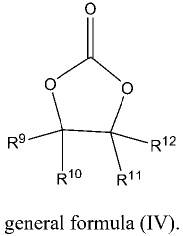

## Description

### TECHNICAL FIELD

The present application relates to the technical field of batteries, and particularly relates to a non-aqueous electrolyte solution, a secondary battery and an electrical apparatus.

### BACKGROUND

In recent years, with the development of lithium-ion secondary battery technology, lithium-ion secondary batteries have been widely used in energy storage power systems such as hydropower, thermal power, wind power and solar power stations, as well as the fields of power tools, electric bicycles, electric motorcycles, electric vehicles, military equipment, aerospace and other fields. Due to the great development of the lithium-ion secondary batteries, higher requirements have been put forward for their fast charging performance, cycling performance and safety performance.

In terms of battery performance, especially for lithium secondary batteries used in automobiles, high output power and long-life performance are required. Meanwhile, low resistance and improved battery life performance are also important issues. The known problems of the increase in battery resistance and the deterioration of battery life include that an electrolyte solution is continuously reduced at a negative electrode during charging, and in order to overcome these problems, it was attempted to add various compounds to the electrolyte solution to form a passivation layer on the surface of the negative electrode, and the passivation layer is also known as an SEI film. The SEI film is a good conductor of lithium ions and a poor conductor of electrons, which inhibits the continuation of the lithium consumption reaction and plays a role in protecting the electrode. The results of study show that the formation of a homogeneous, dense, stable, low-impedance and good adhesion solid electrolyte interphase (SEI) is conducive to improving the electrochemical performance of the battery. If the SEI film generated by electrolyte solution additives is rich in organic components such as alkyl lithium, the impedance of the electrode will be too large, which will deteriorate the power performance of a battery cell; and if the impedance is too large, it may lead to lithium separation at the negative electrode, thus further deteriorating the life of the battery cell.

### SUMMARY OF THE INVENTION

The present application provides a non-aqueous electrolyte solution, a secondary battery and an electrical apparatus, aiming to optimize the cycle and storage performance of a battery cell.

In a first aspect, the present application provides a non-aqueous electrolyte solution, which includes additives; the additives include a first additive and a second additive, and the first additive is any one or more cyclic sulfate compounds having a structure shown in a general formula (I), 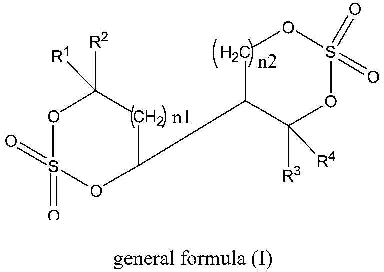
in which, R¹, R², R³ and R⁴ are independently selected from any one of groups having the structure shown in a general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups; n1 and n2 are each any integer from 0 to 2 independently;
the general formula (II) is 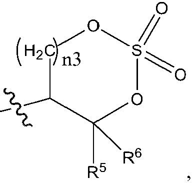
R⁵ and R⁶ are independently selected from any one of groups having the structure shown in the general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups; n3 is any integer from 0 to 2;
the second additive is any one or more cyclic carbonate compounds having a structure shown in a general formula (III) or general formula (IV), 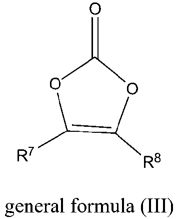
in the general formula (III), R⁷ and R⁸ are independently selected from any one of hydrogen atoms, halogen atoms, C1-C6 alkyl groups, C1-C6 haloalkyl groups, C1-C6 alkoxy groups, C2-C6 alkene groups, C2-C6 alkynyl groups, *R¹³-O-R¹⁴, and *=CR¹⁵R¹⁶; R¹³ is C1-C6 alkylene groups, C1-C6 haloalkylene groups, C2-C6 alkenylene groups, and C2-C6 alkynylene groups; R¹⁴, R¹⁵ and R¹⁶ are independently any one of hydrogen atoms, halogen atoms, C1-C6 alkyl groups, C1-C6 haloalkyl groups, C2-C6 alkene groups, and C2-C6 alkynyl groups; and * represents a connection site; 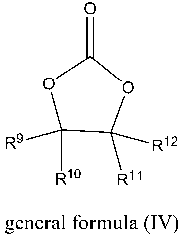
in the general formula (IV), R⁹, R¹⁰, R¹¹, and R¹² are independently selected from any one of hydrogen atoms, halogen atoms, C1-C6 alkyl groups, C1-C6 haloalkyl groups, C1-C6 alkoxy groups, C2-C6 alkene groups, C2-C6 alkynyl groups, *R¹³-O-R¹⁴, and *=CR¹⁵R¹⁶; R¹³ is C1-C6 alkylene groups, C1-C6 haloalkylene groups, C2-C6 alkenylene groups, and C2-C6 alkynylene groups; R¹⁴, R¹⁵, and R¹⁶ are independently any one of hydrogen atoms, halogen atoms, C1-C6 alkyl groups, C1-C6 haloalkyl groups, C2-C6 alkene groups, and C2-C6 alkynyl groups; * represents the connection site; and R⁹, R¹⁰, R¹¹, and R¹² are not the hydrogen atoms at the same time.

The cyclic sulfate additive in the non-aqueous electrolyte solution will generate a more stable SEI film with stronger electron blocking capability on a negative electrode in the first charge process of a secondary battery, the SEI film can more effectively block electrons to relieve continuous decomposition of the electrolyte solution at the negative electrode, thus greatly prolonging the service life of a battery cell; saturated cyclic carbonate and unsaturated cyclic carbonate in the non-aqueous electrolyte solution will generate the SEI film with better elasticity on the negative electrode, and the SEI film can effectively resist the damage caused by the expansion and contraction of a negative electrode plate, so that the cycling performance is further improved. In the present application, the non-aqueous electrolyte solution simultaneously uses the cyclic sulfate and the cyclic carbonate, so that the comprehensive performance of the SEI film is improved, and then the cycle and storage performance of the battery cell is optimized.

In any embodiment in the first aspect, R¹ and R² are not hydrogen atoms at the same time, and R³ and R⁴ are not hydrogen atoms at the same time. Definitely, R¹, R², R³, and R⁴ can be the hydrogen atoms at the same time.

In any embodiment in the first aspect, R¹, R², R³, R⁴, R⁵ and R⁶ meet the following conditions:
R¹ and R² are hydrogen atoms at the same time, one of R³ and R⁴ is the hydrogen atoms, and the other one is any one of groups having the structure shown in the general formula (II), halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups; and R⁵ and R⁶ in the groups having the structure shown in the general formula (II) are not hydrogen atoms at the same time.

In any embodiment in the first aspect, R¹, R², R³, R⁴, R⁵ and R⁶ meet the following conditions:
R³ and R⁴ are hydrogen atoms at the same time, one of R¹ and R² is the hydrogen atoms, and the other one is any one of groups having the structure shown in the general formula (II), halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups; and R⁵ and R⁶ in the groups having the structure shown in the general formula (II) are not hydrogen atoms at the same time.

The R¹, R², R³ and R⁴ groups have substituent groups; alkyl substituent groups and the like can be introduced to generate an elastic SEI film with a longer organic chain at the negative electrode, and therefore, the change in volume of the negative electrode in the cycling process can be solved, and the damage to the SEI film can be avoided; F- and N-containing substituent groups can be introduced to participate in film formation at the negative electrode, and the SEI film rich in LiF, Li₃N and more inorganic components can be generated, thus the mechanical strength of the SEI film is improved, furthermore, the stability of the SEI film at the negative electrode is improved, and the purpose of further improving the cycling performance of the battery is improved.

In any embodiment in the first aspect, the cyclic sulfate compound having the structure shown in a general formula (I-1), 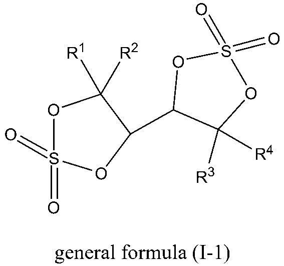
R¹, R², R³ and R⁴ are independently selected from any one of groups having the structure shown in a general formula (II-1), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;
the general formula (II-1) is 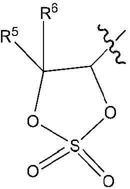
R⁵ and R⁶ are independently selected from any one of groups having the structure shown in the general formula (II-1), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups. The cyclic sulfate rings in the general formula (I-1) are all five-membered rings, which can form a more dense SEI film.

In any embodiment in the first aspect, R¹, R², R³, R⁴, R⁵ and R⁶ are independently selected from any one of groups having the structure shown in the general formula (II-1), hydrogen atoms, halogen atoms, C1-C3 alkyl groups, C1-C3 haloalkyl groups, C1-C3 alkoxy groups, C1-C3 haloalkoxy groups, C2-C3 alkene groups, C1-C3 ester groups, cyano groups, and sulfonic acid groups.

In any embodiment in the first aspect, R¹, R², R³, R⁴, R⁵ and R⁶ are independently selected from any one of groups having the structure shown in the general formula (II-1), hydrogen atoms, halogen atoms, C1-C3 alkyl groups, and C1-C3 haloalkoxy groups.

In any embodiment in the first aspect, R¹, R², R³, R⁴, R⁵ and R⁶ are independently selected from any one of groups having the structure shown in the general formula (II-1), hydrogen atoms, F atoms, Cl atoms, Br atoms, methyl groups, ethyl groups, propyl groups, and isopropyl groups.

In any embodiment in the first aspect, the groups having the structure shown in the general formula (II-1) are selected from any one of the following groups: 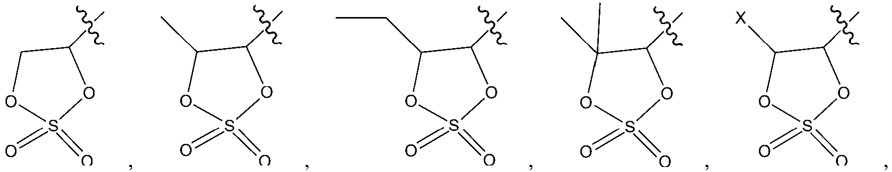 and 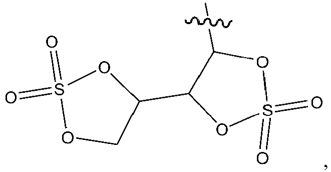 in which, X refers to F atoms, Cl atoms or Br atoms.

In any embodiment in the first aspect, R¹, R², R³ and R⁴ are independently selected from any one of 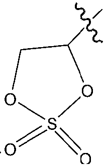 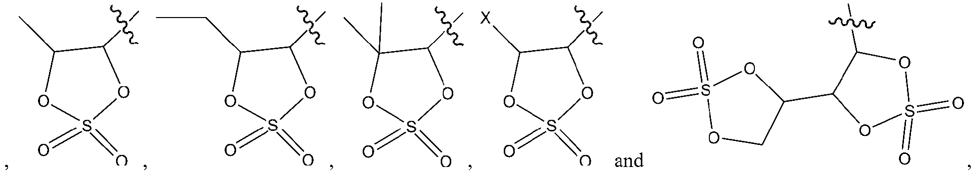 hydrogen atoms, F atoms, Cl atoms, Br atoms, methyl groups, ethyl groups, propyl groups, and isopropyl groups; and X refers to F atoms.

In any embodiment in the first aspect, R¹, R², R³ and R⁴ are independently selected from any one of 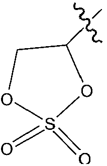 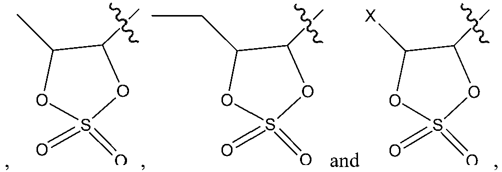 hydrogen atoms, methyl groups and ethyl groups; and X refers to F atoms.

In any embodiment in the first aspect, the cyclic sulfate compound is selected from any one or more of the following compounds:

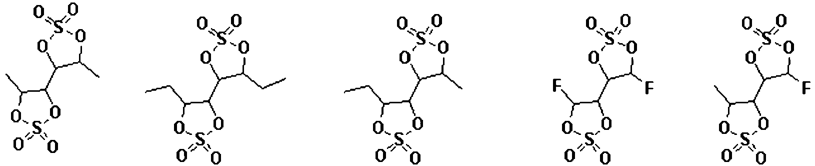

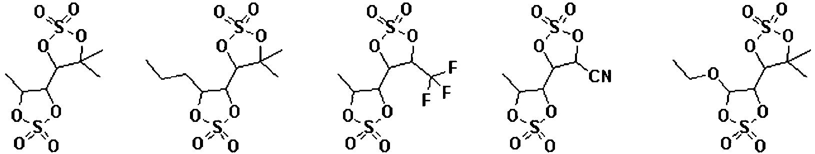

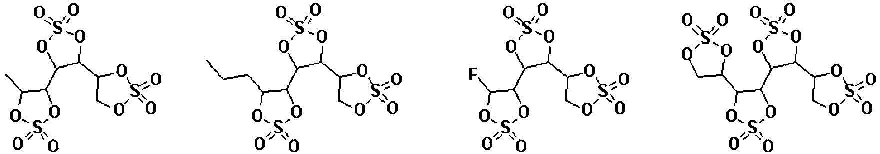

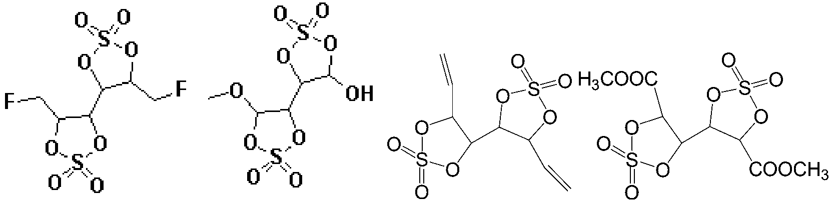

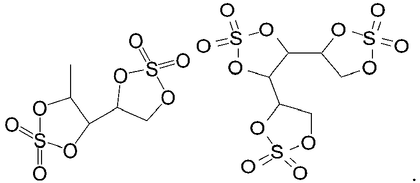

A preparation method of the cyclic sulfate compounds is simpler, and it is easier to popularize and implement in industry, and has a more stable effect of improving the cycling performance of the secondary battery.

In any embodiment in the first aspect, R⁷ and R⁸ are independently selected from any one of hydrogen atoms, halogen atoms, C1-C4 alkyl groups, C1-C4 haloalkyl groups, C1-C4 alkoxy groups, C2-C4 alkene groups, and C2-C4 alkynyl groups.

In any embodiment in the first aspect, R⁷ and R⁸ are independently selected from any one of hydrogen atoms, halogen atoms, C1-C4 alkyl groups, C1-C4 haloalkyl groups, and C2-C4 alkene groups.

In any embodiment in the first aspect, R⁷ and R⁸ are independently selected from any one of hydrogen atoms, halogen atoms, methyl groups, ethyl groups, n-propyl groups, isopropyl groups, n-butyl groups, isobutyl groups, halomethyl groups, haloethyl groups, halopropyl groups, vinyl groups, and propylene groups.

In any embodiment in the first aspect, R⁷ and R⁸ are independently selected from any one of hydrogen atoms, halogen atoms, methyl groups, ethyl groups, n-propyl groups, isopropyl groups, halomethyl groups, haloethyl groups, and vinyl groups.

In any embodiment in the first aspect, the halogen atoms are F atoms, and Cl atoms, and further optionally, F atoms.

In any embodiment in the first aspect, the cyclic sulfate compound having the general formula (III) is selected from any one or more of the following compounds:

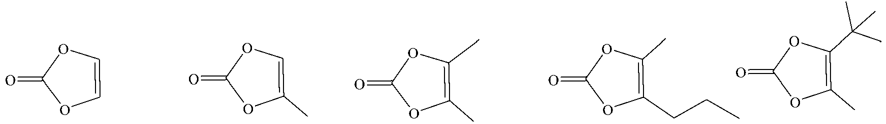

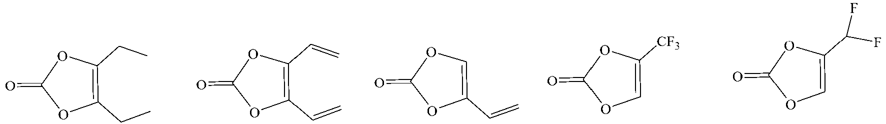

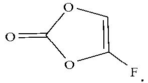

The test shows that and 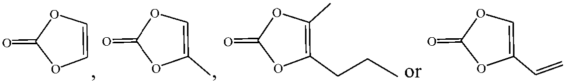 in use can form a dense and elastic SEI film, which can effectively relieve the damage caused by the expansion and the contraction of the negative electrode plate.

In any embodiment in the first aspect, R⁹, R¹⁰, R¹¹ and R¹² are independently selected from any one of hydrogen atoms, halogen atoms, C1-C4 alkyl groups, C1-C4 haloalkyl groups, C1-C4 alkoxy groups, C2-C4 alkene groups, C2-C4 alkynyl groups, *R¹³-O-R¹⁴, *=CR¹⁵R¹⁶ respectively; R¹³ is C1-C4 alkylene groups, C1-C4 haloalkylene groups, C2-C4 alkenylene groups, and C2-C4 alkynylene groups; and R¹⁴, R¹⁵, and R¹⁶ are independently any one of hydrogen atoms, C1-C4 alkyl groups, C1-C4 haloalkyl groups, C2-C4 alkene groups, and C2-C4 alkynyl groups.

In any embodiment in the first aspect, R⁹, R¹⁰, R¹¹, and R¹² are independently selected from any one of hydrogen atoms, halogen atoms, C1-C4 alkyl groups, C1-C4 haloalkyl groups, C2-C4 alkene groups, C2-C4 alkynyl groups, *R¹³-O-R¹⁴, and *=CR¹⁵R¹⁶; R¹³ is C1-C4 alkylene groups, C2-C4 alkenylene groups, and C2-C4 alkynylene groups; and R¹⁴, R¹⁵, and R¹⁶ are independently any one of hydrogen atoms, halogen atoms, C1-C4 alkyl groups, C2-C4 alkene groups, and C2-C4 alkynyl groups.

In any embodiment in the first aspect, R⁹, R¹⁰, R¹¹ and R¹² are independently selected from any one of hydrogen atoms, halogen atoms, methyl groups, ethyl groups, n-propyl groups, isopropyl groups, halomethyl groups, haloethyl groups, halopropyl groups, vinyl groups, propylene groups, ethynyl groups, propinyl groups, *methylene-O-R¹⁴, *ethylidene-O-R¹⁴, and *=CR¹⁵R¹⁶; R¹⁴ is any one of hydrogen atoms, methyl groups, ethyl groups, vinyl groups, and ethynyl groups; and R¹⁵ and R¹⁶ are each independently hydrogen atoms or F atoms.

In any embodiment in the first aspect, the halogen atoms are F atoms, and Cl atoms, and further optionally, F atoms.

In any embodiment in the first aspect, the cyclic sulfate compound having the general formula (IV) is selected from any one or more of the following compounds:

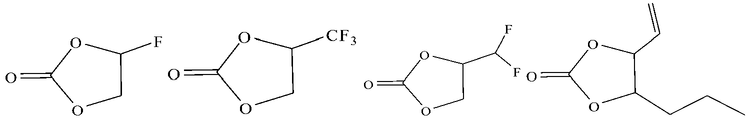

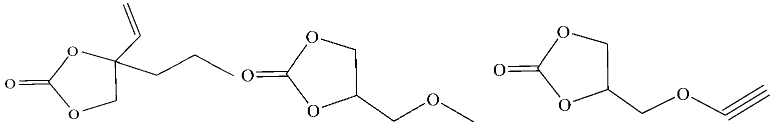

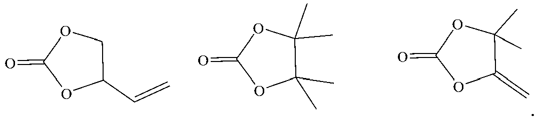

The test shows that 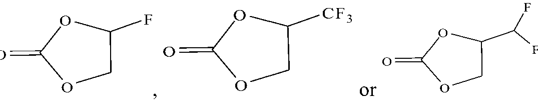 in use can form an SEI film rich in LiF, which can effectively block electrons and relieve the damage caused by the expansion and the contraction of the negative electrode plate.

In any embodiment in the first aspect, the mass ratio of the first additive in the non-aqueous electrolyte solution is W1, optionally, the W1 is 0.001%-20%, and further optionally, the W1 is 0.1%-5%. The cyclic sulfate compound is used for forming the sufficient SEI film with high stability and strong electron blocking capability and mixed by organic matters and inorganic matters, therefore, the cycling performance of the secondary battery can be effectively improved, and in addition, the output power of the secondary battery can also be improved.

In any embodiment in the first aspect, the mass ratio of the second additive in the non-aqueous electrolyte solution is W2, optionally, the W2 is 0.001%-20%, and further optionally, the W2 is 0.1%-5%. The cyclic carbonate is used for forming the SEI film with more proper thickness, so that the elasticity is ensured, and the negative influence on the conductivity is avoided.

In any embodiment in the first aspect, 0.01≤W1/W2≤10, preferably, 0.05≤W1/W2≤5, and the proportion of the two substances can be controlled to optimize the proportion of different types of SEI films formed by the two substances, and further, the improvement effect of the overall performance of the SEI on the cycle and storage performance of the battery cell is further optimized.

In any embodiment in the first aspect, the non-aqueous electrolyte solution also includes an electrolyte, and the electrolyte includes an alkali metal salt electrolyte; optionally, the electrolyte includes a lithium salt or a sodium salt; optionally, the lithium salt includes one or more selected from a group consisting of lithium hexafluorophosphate, lithium perchlorate, lithium hexafluoroarsenate, lithium bis(fluorosulfonyl)imide and lithium bis(trifluoromethanesulfonyl)imide; and the sodium salt includes one or more selected from a group consisting of sodium hexafluorophosphate, sodium difluoroborate, sodium perchlorate, sodium bis(fluorosulfonyl)imide, sodium bis(trifluoromethanesulfonyl)imide and sodium trifluoromethanesulfonate. The lithium salt or sodium salt can be used independently, and can also be used by mixing two or more than two.

In any embodiment in the first aspect, the non-aqueous electrolyte solution further includes a non-aqueous solvent, and optionally, the non-aqueous solvent includes any one or more selected from a group consisting of cyclic carbonate, chain carbonate, a nitrile solvent, a ketone solvent and a sulfone solvent; and further optionally, the non-aqueous solvent includes one or more selected from a group consisting of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, ethyl sulfone, tetrahydrofuran, ethylene glycol dimethyl ether, dioxolane, acetone, acetonitrile and butyronitrile.

In any embodiment in the first aspect, the additives further include but are not limited to one or more selected from a group consisting of a sulfate compound, a sulfite compound, a sultone compound, a disulfonic acid compound, a nitrile compound, an aromatic compound, an isocyanate compound, a phosphazene compound, a cyclic anhydride compound, a phosphite compound, a phosphate compound, a borate compound and a carboxylate compound.

In a second aspect, the present application provides a secondary battery; the secondary battery includes a positive electrode plate, an electrolyte solution, a separator and a negative electrode plate, in which, the electrolyte solution includes any non-aqueous electrolyte solution in the first aspect; and optionally, the secondary battery is a lithium-ion secondary battery or a sodium-ion secondary battery. The secondary battery has high cycling performance and storage performance.

In any embodiment in the second aspect, the negative electrode plate includes a negative electrode current collector and a negative electrode film layer arranged on one side or two sides of the negative electrode current collector; and optionally, the porosity of the negative electrode film layer is 30%-45%, optionally, 37%-42%. The wettability of the negative electrode material in the electrolyte solution is improved, and the battery cell has high energy density.

In any embodiment in the second aspect, the negative electrode film layer includes a negative electrode active material, optionally, the Dv50 of the negative electrode active material is shown as D_{V}50≥6µm, and further optionally, the D_{V}50 of the negative electrode active material is 15-20 µm. The surface side reaction of the negative electrode is reduced, so that the cycle and storage performance of the battery cell is improved.

In a third aspect, the present application provides an electrical apparatus which includes a secondary battery, in which, the secondary battery includes any secondary battery in the second aspect. The secondary battery has high cycling performance and storage performance, so that a power supply system of the electrical apparatus has long service life.

### BRIEF DESCRIPTION OF THE DRAWINGS

In order to more clearly illustrate the technical solution of the embodiments of the present application, the drawings that need to be used in the embodiments of the present application will be briefly introduced below, and it is obvious that the drawings described below are only some embodiments of the present application, and for those skilled in the art, other drawings can also be obtained according to the drawings without paying creative labor.
FIG. 1 is a schematic diagram of a secondary battery according to an embodiment of the present application.
FIG. 2 is an exploded view of the secondary battery according to an embodiment of the present application shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to an embodiment of the present application shown in FIG. 4.
FIG. 6 is a schematic diagram of an electrical apparatus using a secondary battery as a power supply according to an embodiment of the present application.

The accompanying drawings are not drawn to actual scale.

### Reference numerals:

1. Battery pack; 2. Upper box; 3. Lower box; 4. Battery module; 5. Secondary battery; 51. Case; 52. Electrode assembly; 53. Top cover assembly.

### DETAILED DESCRIPTION

Embodiments of the present application are described in further detail below in conjunction with the drawings and embodiments. The detailed descriptions and accompanying drawings of the following embodiments are used for illustrating the principles of the present application, but cannot be used for limiting the scope of the present application, i.e., the present application is not limited to the embodiments described.

Embodiments of a non-aqueous electrolyte solution, a secondary battery and an electrical apparatus of the present application are specifically described below in detail with appropriate reference to the accompanying drawings. However, there may be cases where unnecessary elaboration is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. Additionally, when it is stated that a certain parameter is an integer of ≥2, it is equivalent to disclosing that the parameter is, for example, an integer of 2, 3, 4, 5, 6, 7, 8, 9, 10, 11, 12, etc.

Unless otherwise specified, all the embodiments and optional embodiments of the present application can be combined with each other form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), which means that the method may comprise steps (a) and (b) performed in order, or may comprise steps (b) and (a) performed in order. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, condition "A or B" is met by either of the following: A is true (or exists) and B is false (or does not exist); A is false (or non-existent) and B is true (or exists); or both A and B are true (or exist).

### [Secondary battery]

A secondary battery also known as a rechargeable battery or a storage battery refers to a battery that can be used continually by activating an active material in a charging manner after the battery is discharged.

Generally, the secondary battery includes a positive electrode plate, a negative electrode plate, a separator and an electrolyte. During charging and discharging of the battery, active ions (e.g., lithium ions) are intercalated and deintercalated back and forth between the positive electrode plate and the negative electrode plate. The separator is arranged between the positive electrode plate and the negative electrode plate, and mainly functions to prevent a short circuit between the positive electrode and the negative electrode while allowing active ions to pass through. The electrolyte solution is located between the positive electrode plate and the negative electrode plate, and mainly plays a role in conducting the active ions.

### [Non-aqueous electrolyte solution]

An embodiment of the present application provides a non-aqueous electrolyte solution, which includes additives; the additives include a first additive and a second additive, and the first additive is any one or more cyclic sulfate compounds having a structure shown in a general formula (I), 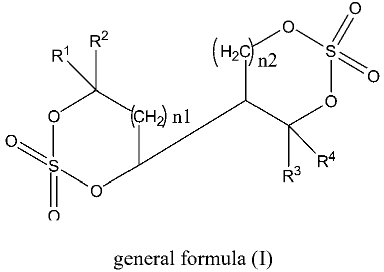
in which, R¹, R², R³ and R⁴ are independently selected from any one of groups having the structure shown in a general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups; n1 and n2 are each any integer from 0 to 2 independently;
the general formula (II) is 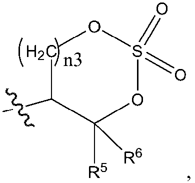
R⁵ and R⁶ are independently selected from any one of groups having the structure shown in the general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups; n3 is any integer from 0 to 2;
the second additive includes any one or more cyclic carbonate compounds having a structure shown in a general formula (III) or general formula (IV), 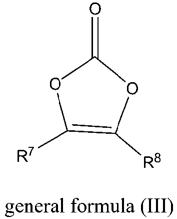
in the general formula (III), R⁷ and R⁸ are independently selected from any one of hydrogen atoms, halogen atoms, C1-C6 alkyl groups, C1-C6 haloalkyl groups, C1-C6 alkoxy groups, C2-C6 alkene groups, C2-C6 alkynyl groups, *R¹³-O-R¹⁴, and *=CR¹⁵R¹⁶; R¹³ is C1-C6 alkylene groups, C1-C6 haloalkylene groups, C2-C6 alkenylene groups, and C2-C6 alkynylene groups; R¹⁴, R¹⁵ and R¹⁶ are independently any one of hydrogen atoms, halogen atoms, C1-C6 alkyl groups, C1-C6 haloalkyl groups, C2-C6 alkene groups, and C2-C6 alkynyl groups; and * represents a connection site; 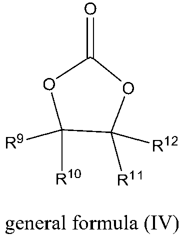
in the general formula (IV), R⁹, R¹⁰, R¹¹, and R¹² are independently selected from any one of hydrogen atoms, halogen atoms, C1-C6 alkyl groups, C1-C6 haloalkyl groups, C1-C6 alkoxy groups, C2-C6 alkene groups, C2-C6 alkynyl groups, *R¹³-O-R¹⁴, and *=CR¹⁵R¹⁶; R¹³ is C1-C6 alkylene groups, C1-C6 haloalkylene groups, C2-C6 alkenylene groups, and C2-C6 alkynylene groups; R¹⁴, R¹⁵, and R¹⁶ are independently any one of hydrogen atoms, halogen atoms, C1-C6 alkyl groups, C1-C6 haloalkyl groups, C2-C6 alkene groups, and C2-C6 alkynyl groups; * represents the connection site; and R⁹, R¹⁰, R¹¹, and R¹² are not the hydrogen atoms at the same time.

The cyclic sulfate additive in the non-aqueous electrolyte solution will generate a more stable SEI film with stronger electron blocking capability on a negative electrode in the first charge process of a secondary battery, the SEI film can more effectively block electrons to relieve continuous decomposition of the electrolyte solution at the negative electrode, thus greatly prolonging the service life of a battery cell; saturated cyclic carbonate and unsaturated cyclic carbonate in the non-aqueous electrolyte solution will generate the SEI film with better elasticity on the negative electrode, and the SEI film can effectively resist the damage caused by the expansion and contraction of a negative electrode plate, so that the cycling performance is further improved. In the present application, the non-aqueous electrolyte solution simultaneously uses the cyclic sulfate and the cyclic carbonate, so that the comprehensive performance of the SEI film is improved, and then the cycle and storage performance of the battery cell is optimized.

In some embodiments, R¹ and R² are not hydrogen atoms at the same time, and R³ and R⁴ are not hydrogen atoms at the same time. Definitely, R¹, R², R³, and R⁴ can be the hydrogen atoms at the same time.

In some embodiments, R¹, R², R³, R⁴, R⁵ and R⁶ meet the following conditions:
R¹ and R² are hydrogen atoms at the same time, one of R³ and R⁴ is the hydrogen atoms, and the other one is any one of groups having the structure shown in the general formula (II), halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups; and R⁵ and R⁶ in the groups having the structure shown in the general formula (II) are not hydrogen atoms at the same time.

In some embodiments, R¹, R², R³, R⁴, R⁵ and R⁶ meet the following conditions:
R³ and R⁴ are hydrogen atoms at the same time, one of R¹ and R² is the hydrogen atoms, and the other one is any one of groups having the structure shown in the general formula (II), halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups; and R⁵ and R⁶ in the groups having the structure shown in the general formula (II) are not hydrogen atoms at the same time.

The R¹, R², R³ and R⁴ groups have substituent groups; alkyl substituent groups and the like can be introduced to generate an elastic SEI film with a longer organic chain at the negative electrode, and therefore, the change in volume of the negative electrode in the cycling process can be solved, and the damage to the SEI film can be avoided; F- and N-containing substituent groups can be introduced to participate in film formation at the negative electrode, and the SEI film rich in LiF, Li₃N and more inorganic components can be generated, thus the mechanical strength of the SEI film is improved, furthermore, the stability of the SEI film at the negative electrode is improved, and the purpose of further improving the cycling performance of the battery is improved.

The alkyl groups can be linear alkyl groups, branched alkyl groups or naphthenic base, including but not limited to methyl groups, ethyl groups, propyl groups, isopropyl groups, N-butyl groups, isobutyl groups, cyclopropanealkyl groups, cyclobutyl groups and the like; the alkyl groups in the halogenated alkyl groups include but are not limited to linear alkyl groups, branched alkyl groups or naphthenic base, such as methyl groups, ethyl groups, propyl groups, isopropyl groups, N-butyl groups, isobutyl groups, cyclopropanealkyl groups, cyclobutyl groups and the like; the halogen atoms can be fluorine atoms, chlorine atoms or bromine atoms, and the halogen atoms substitute any one or more hydrogen atoms on the alkyl groups; the alkoxy groups include but are not limited to cyclopropanealkyl groups, oxetanyl groups and the like; the halogen atoms in the haloalkoxy groups can be fluorine atoms, chlorine atoms or bromine atoms, and the halogen atoms substitute any one or more hydrogen atoms on the alkoxy groups; the alkenyl groups include but are not limited to -CH=CH₂, -CH=CH₂CH₃, -CH₂CH=CH₂, and -CH₂CH=CH₂CH₃; and the ester groups include but are not limited to methyl formate groups, ethyl formate groups, ethyl acetate groups, methyl propionate groups, ethyl propionate groups, propyl propionate groups and the like.

In some embodiments, the cyclic sulfate compound having the structure shown in a general formula (I-1), 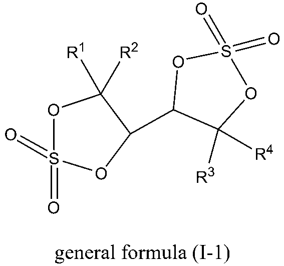
R¹, R², R³ and R⁴ are independently selected from any one of groups having the structure shown in a general formula (II-1), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;
the general formula (II-1) is 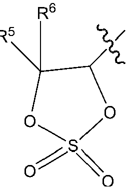
R⁵ and R⁶ are independently selected from any one of groups having the structure shown in the general formula (II-1), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups.

The cyclic sulfate rings in the general formula (I-1) are all five-membered rings, which can form a more dense SEI film. Compared with a six-membered ring, the five-membered ring has a greater ring tension and is easy to form films at the positive and negative electrodes, while the six-membered ring has a smaller ring tension and higher stability, and is slower to form the film at the negative electrode, so the efficiency of the generated SEI film that can block electrons is lower, which affects the exertion of the effect of the SEI film.

In some embodiments, R¹, R², R³, R⁴, R⁵ and R⁶ are independently selected from any one of groups having the structure shown in the general formula (II-1), hydrogen atoms, halogen atoms, C1-C3 alkyl groups, C1-C3 haloalkyl groups, C1-C3 alkoxy groups, C1-C3 haloalkoxy groups, C2-C3 alkene groups, C1-C3 ester groups, cyano groups, and sulfonic acid groups.

In some embodiments, R¹, R², R³, R⁴, R⁵ and R⁶ are independently selected from any one of groups having the structure shown in the general formula (II-1), hydrogen atoms, halogen atoms, C1-C3 alkyl groups, and C1-C3 haloalkoxy groups.

In some embodiments, R¹, R², R³, R⁴, R⁵ and R⁶ are independently selected from any one of groups having the structure shown in the general formula (II-1), hydrogen atoms, F atoms, Cl atoms, Br atoms, methyl groups, ethyl groups, propyl groups, and isopropyl groups.

In some embodiments, the groups having the structure shown in the general formula (II-1) are selected from any one of the following groups: 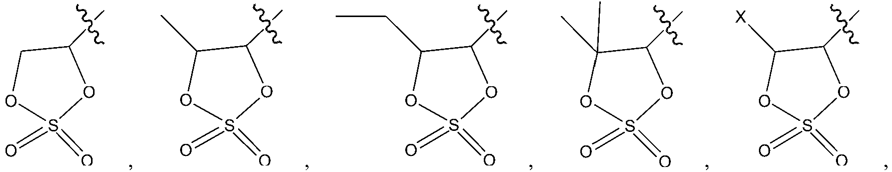 and 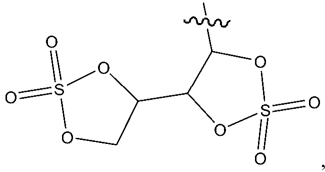 in which, X refers to F atoms, Cl atoms or Br atoms.

In some embodiments, R¹, R², R³ and R⁴ are independently selected from any one of 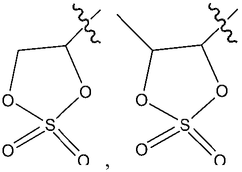 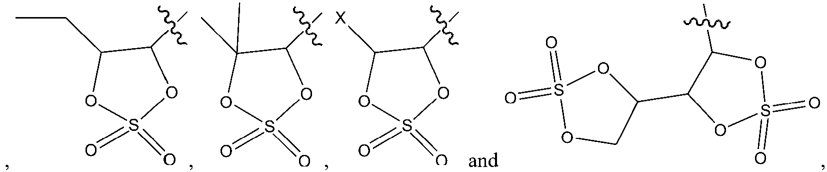 hydrogen atoms, F atoms, Cl atoms, Br atoms, methyl groups, ethyl groups, propyl groups, and isopropyl groups; and X refers to F atoms.

In some embodiments, R¹, R², R³ and R⁴ are independently selected from any one of 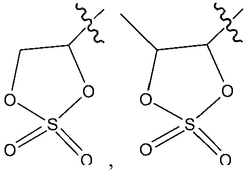 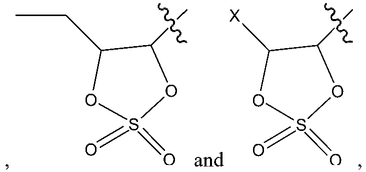 hydrogen atoms, methyl groups and ethyl groups; and X refers to F atoms.

In some embodiments, the cyclic sulfate compound is selected from any one or more of the following compounds:

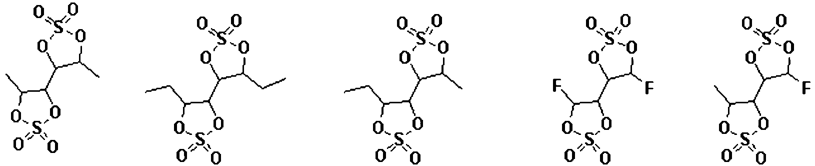

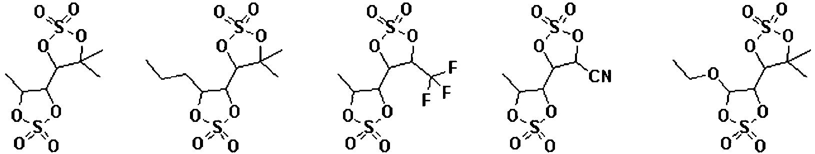

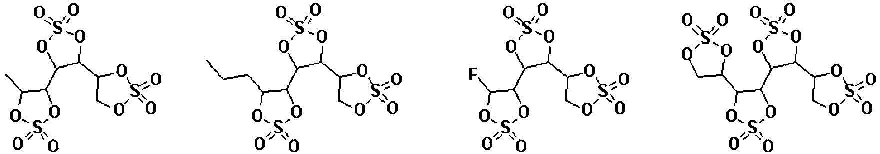

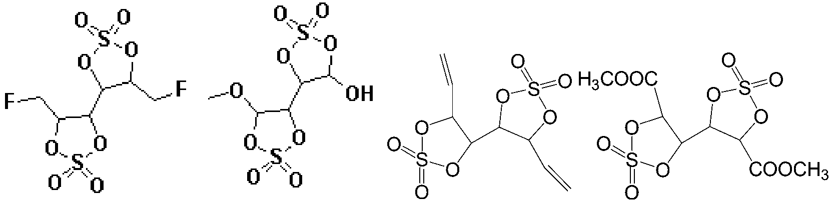

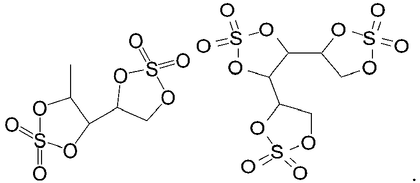

A preparation method of the cyclic sulfate compounds is simpler, and it is easier to popularize and implement in industry, and has a more stable effect of improving the cycling performance of the secondary battery.

In some embodiments, R⁷ and R⁸ are independently selected from any one of hydrogen atoms, halogen atoms, C1-C4 alkyl groups, C1-C4 haloalkyl groups, C1-C4 alkoxy groups, C2-C4 alkene groups, and C2-C4 alkynyl groups.

In some embodiments, R⁷ and R⁸ are independently selected from any one of hydrogen atoms, halogen atoms, C1-C4 alkyl groups, C1-C4 haloalkyl groups, and C2-C4 alkene groups.

In some embodiments, R⁷ and R⁸ are independently selected from any one of hydrogen atoms, halogen atoms, methyl groups, ethyl groups, n-propyl groups, isopropyl groups, n-butyl groups, isobutyl groups, halomethyl groups, haloethyl groups, halopropyl groups, vinyl groups, and propylene groups.

In some embodiments, R⁷ and R⁸ are independently selected from any one of hydrogen atoms, halogen atoms, methyl groups, ethyl groups, n-propyl groups, isopropyl groups, halomethyl groups, haloethyl groups, and vinyl groups.

In some embodiments, the halogen atoms are F atoms, and Cl atoms, and further optionally, F atoms.

In some embodiments, the cyclic sulfate compound having the general formula (III) is selected from any one or more of the following compounds:

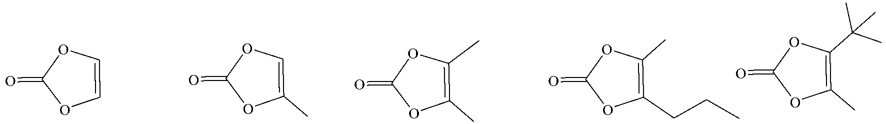

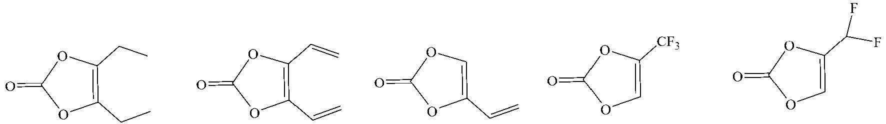

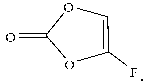

The test shows that and 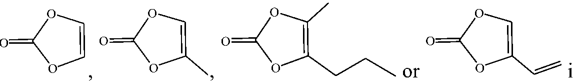 in use can form a dense and elastic SEI film, which can effectively relieve the damage caused by the expansion and the contraction of the negative electrode plate.

In some embodiments, R⁹, R¹⁰, R¹¹ and R¹² are independently selected from any one of hydrogen atoms, halogen atoms, C1-C4 alkyl groups, C1-C4 haloalkyl groups, C1-C4 alkoxy groups, C2-C4 alkene groups, C2-C4 alkynyl groups, *R¹³-O-R¹⁴, *=CR¹⁵R¹⁶ respectively; R¹³ is C1-C4 alkylene groups, C1-C4 haloalkylene groups, C2-C4 alkenylene groups, and C2-C4 alkynylene groups; and R¹⁴, R¹⁵, and R¹⁶ are independently any one of hydrogen atoms, C1-C4 alkyl groups, C1-C4 haloalkyl groups, C2-C4 alkene groups, and C2-C4 alkynyl groups.

In some embodiments, R⁹, R¹⁰, R¹¹, and R¹² are independently selected from any one of hydrogen atoms, halogen atoms, C1-C4 alkyl groups, C1-C4 haloalkyl groups, C2-C4 alkene groups, C2-C4 alkynyl groups, *R¹³-O-R¹⁴, and *=CR¹⁵R¹⁶; R¹³ is C1-C4 alkylene groups, C2-C4 alkenylene groups, and C2-C4 alkynylene groups; and R¹⁴, R¹⁵, and R¹⁶ are independently any one of hydrogen atoms, halogen atoms, C1-C4 alkyl groups, C2-C4 alkene groups, and C2-C4 alkynyl groups.

In some embodiments, R⁹, R¹⁰, R¹¹ and R¹² are independently selected from any one of hydrogen atoms, halogen atoms, methyl groups, ethyl groups, n-propyl groups, isopropyl groups, halomethyl groups, haloethyl groups, halopropyl groups, vinyl groups, propylene groups, ethynyl groups, propinyl groups, *methylene-O-R¹⁴, *ethylidene-O-R¹⁴, and *=CR¹⁵R¹⁶; R¹⁴ is any one of hydrogen atoms, methyl groups, ethyl groups, vinyl groups, and ethynyl groups; and R¹⁵ and R¹⁶ are each independently hydrogen atoms or F atoms.

In some embodiments, the halogen atoms are F atoms, and Cl atoms, and further optionally, F atoms.

In some embodiments, the cyclic sulfate compound having the general formula (IV) is selected from any one or more of the following compounds:

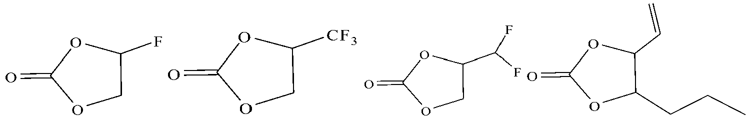

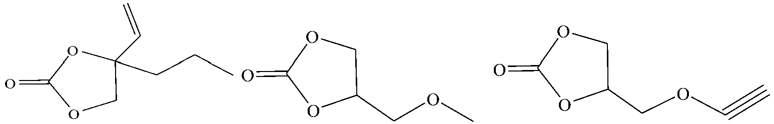

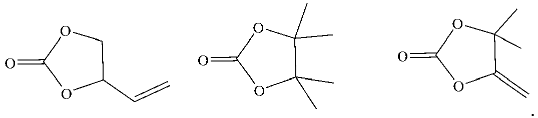

The test shows that 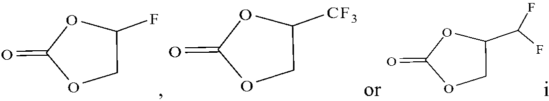 in use can form an SEI film rich in LiF, which can effectively block electrons and relieve the damage caused by the expansion and the contraction of the negative electrode plate.

The dosage of the cyclic sulfate compound in each embodiment of the present application may refer to the dosage of conventional cyclic sulfate compounds in conventional non-aqueous electrolyte solutions; in some embodiments, the mass ratio of the first additive in the non-aqueous electrolyte solution is W1, optionally, the W1 is 0.001%-20%, such as 0.001%, 0.005%, 0.01%, 0.05%, 0.1%, 0.5%, 1%, 3%, 5%, 10%, 15% or 20%, and further optionally, W1 is 0.1%-5%. The cyclic sulfate compound is used for forming the sufficient SEI film with high stability and strong electron blocking capability and mixed by organic matters and inorganic matters, therefore, the cycling performance of the secondary battery can be effectively improved, and in addition, the output power of the secondary battery can also be improved. Through the above-mentioned limitation to the mass content, it is avoided that the effect of the SEI film cannot be fully exerted due to low content of the cyclic sulfate compounds, and the viscosity of the electrolyte solution is too large due to excessive cyclic sulfate compounds and the SEI film formed at the negative electrode is too thick, which deteriorates the conductivity of the electrolyte solution, and then worsens the improvement effect of cycling performance and charging capacity.

The dosage of the cyclic sulfate compound in each embodiment of the present application may refer to the dosage of conventional cyclic sulfate compounds in conventional non-aqueous electrolyte solutions; in some embodiments, the mass ratio of the second additive in the non-aqueous electrolyte solution is W2, optionally, the W2 is 0.001%-20%, such as 0.001%, 0.005%, 0.01%, 0.05%, 0.1%, 0.5%, 1%, 3%, 5%, 10%, 15% or 20%, and further optionally, the W2 is 0.1%-5%. The cyclic carbonate is used for forming the SEI film with more proper thickness, so that the elasticity is ensured, and the negative influence on the conductivity is avoided.

In some embodiments, 0.01≤W1/W2≤10, preferably, 0.05≤W1/W2≤5, and the proportion of the two substances can be controlled to optimize the proportion of different types of SEI films formed by the two substances, and further, the improvement effect of the overall performance of the SEI on the cycle and storage performance of the battery cell is further optimized.

In some embodiments, the non-aqueous electrolyte solution also includes an electrolyte, and any electrolyte which can be usually used in the non-aqueous electrolyte solution can be considered to be applied to the non-aqueous electrolyte solution in the present application. Those skilled in the art can select according to a battery system in which the non-aqueous electrolyte solution is applied, for example, a conventional electrolyte suitable for the lithium-ion secondary battery or sodium-ion secondary battery is selected. In some embodiments, the electrolyte includes an alkali metal salt electrolyte; optionally, the electrolyte includes lithium salt or sodium salt; and optionally, the lithium salt includes one or more selected from a group consisting of lithium hexafluorophosphate, lithium perchlorate, lithium hexafluoroarsenate, lithium bis(fluorosulfonyl)imide and lithium bis(trifluoromethanesulfonyl)imide; and the sodium salt includes one or more selected from a group consisting of sodium hexafluorophosphate, sodium difluoroborate, sodium perchlorate, sodium bis(fluorosulfonyl)imide, sodium bis(trifluoromethanesulfonyl)imide and sodium trifluoromethanesulfonate. The lithium salt or sodium salt can be used independently, and can also be used by mixing two or more than two.

The dosage of the electrolyte in the non-aqueous electrolyte solution may refer to the dosage of the electrolyte in the conventional non-aqueous electrolyte solution; in some embodiments, the content of the electrolyte in the non-aqueous electrolyte solution is 0.1-5 mol/L, for example, it can be 0.1 mol/L, 0. 3 mol/L, 0.5 mol/L, 1 mol/L, 1.5 mol/L, 2 mol/L, 2.5 mol/L, 3 mol/L, 4 mol/L or 5 mol/L, optionally, 0.5-1.5 mol/L, and further optionally, 0.7-1.2 mol/L.

In some embodiments, the non-aqueous electrolyte solution further includes a non-aqueous solvent, and optionally, the non-aqueous solvent includes any one or more selected from a group consisting of cyclic carbonate, chain carbonate, a nitrile solvent, a ketone solvent and a sulfone solvent; and further optionally, the non-aqueous solvent includes one or more selected from a group consisting of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, ethyl sulfone, tetrahydrofuran, ethylene glycol dimethyl ether, dioxolane, acetone, acetonitrile and butyronitrile. The non-aqueous solvent can be used independently or used in a manner of mixing two or more, for example, in order to improve the load characteristic and low-temperature characteristic of the secondary battery, a mixed solvent of cyclic carbonate and chain carbonate can be adopted. When the non-aqueous electrolyte solution in the present application is applied to a solid battery, a solid solvent such as dimethyl sulfone can be adopted.

In addition to the above additives, the additives can further include a negative electrode film-forming additive and a positive electrode film-forming additive, and can further include additives that can improve certain performances of the battery, such as an additive that can improve the overcharge performance of the battery, an additive that can improve the high-temperature or low-temperature performance of the battery. In some embodiments, the additives further include but are not limited to one or more selected from a group consisting of a sulfate compound, a sulfite compound, a sultone compound, a disulfonic acid compound, a nitrile compound, an aromatic compound, an isocyanate compound, a phosphazene compound, a cyclic anhydride compound, a phosphite compound, a phosphate compound, a borate compound and a carboxylate compound.

### [Preparation method of cyclic sulfate compound having structure shown in general formula (I)]

In the present application, a preparation method of the cyclic sulfate compound having the structure shown in the general formula (I) refers to the following synthetic route: 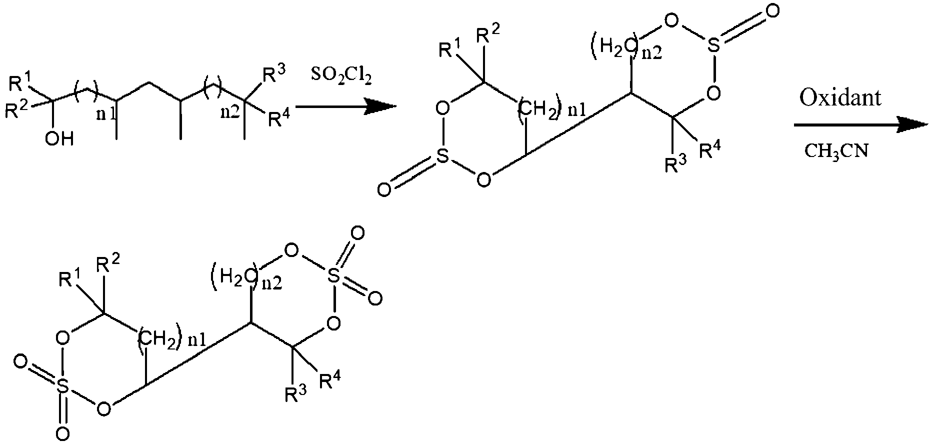 in which, the reaction temperature in the first step is controlled to be 30-60°C; the reaction temperature in the second step is controlled to be 10-30°C, and in the second step, a catalyst such as ruthenium trichloride trihydrate is used for catalysis, and an oxidant can be sodium hypochlorite, ozone and the like.

### [Positive electrode plate]

The positive electrode plate includes a positive electrode current collector and a positive electrode film layer arranged on at least one surface of the positive electrode current collector, and the positive electrode film layer includes a positive electrode active material.

As an example, the positive electrode current collector has two opposite surfaces in the thickness direction, and the positive electrode membrane layer is arranged on any one of or both the two opposite surfaces of the positive electrode current collector.

In some embodiments, the positive electrode current collector may be a metal foil or a composite current collector. For example, an aluminum foil may be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may comprise at least one of the following materials: a lithium-comprising phosphate of olivine structure, a lithium transition metal oxide, and a respective modified compound thereof. However, the present application is not limited to these materials, and other conventional materials that can be used as positive electrode active materials for batteries may also be used. Only a single one of or a combination of two or more of these positive electrode active materials can be used. Examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such as LiNi_{0.85}Co_{0.15}Al_{0.05}O₂), and a modified compound thereof. Examples of lithium-containing phosphates of olivine structure may comprise, but are not limited to, at least one of lithium iron phosphate (e.g., LiFePO₄ (also abbreviated as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer optionally includes the binder. As an example, the binder can include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and fluorine~ acrylate resin.

In some embodiments, the positive electrode film layer also optionally includes the conductive agent. As an example, the conductive agent can include at least one of superconducting carbon, acetylene black, carbon black, Ketjen black, carbon dots, carbon nanotubes, graphene and carbon nanofibers.

In some embodiments, the positive electrode plate can be prepared by the following steps: dispersing the components for preparing the positive electrode plate, such as the positive electrode active material, the conductive agent, the binder and any other component, in a solvent (such as N~ pyrrolidone) to form positive electrode slurry; and coating a positive electrode current collector with the positive electrode slurry performing drying, cold pressing and other processes to obtain the positive electrode plate.

### [Negative electrode plate]

The negative electrode plate comprises a negative electrode current collector and a negative electrode film layer arranged on at least one surface of the negative electrode current collector, and the negative electrode film layer comprises a negative electrode active material.

As an example, the negative electrode current collector has two opposite surfaces in the thickness direction, and the negative electrode material layer is arranged on any one or both of the two opposite surfaces of the negative electrode current collector.

In some embodiments, the negative electrode current collector may be a metal foil or a composite current collector. For example, a copper foil may be used as the metal foil. The composite current collector can comprise a polymer material substrate layer and a metal layer formed on at least one surface of the polymer material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative electrode active material may include at least one of the following materials: artificial graphite, natural graphite, soft carbon, hard carbon, silicon-based material, tin-based material, lithium titanate, etc. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials can be used alone or in combination with more than two.

In some embodiments, the porosity of the negative electrode film layer is 30%-45%, and optionally, 37%-42%. When the porosity of the negative electrode film layer on the negative electrode plate is smaller than 30%, pores among particles in the negative electrode film layer are relatively few, consequently, the particle structure will be extruded and damaged, which increases the electrolyte solution infiltration difficulty, increases the polarization of the battery cell, and degrades the long-term cycling performance of the battery cell; and when the porosity of the negative electrode film layer on the negative electrode plate is greater than 45%, the rebound of the electrode plate is relatively large, which leads to decrease of the compaction of the electrode plate in actual use, and affects the energy density of the battery cell.

The porosity of a negative electrode active material coating on the negative electrode plate is tested by an AccuPyc II 1340 real density instrument according to an instrument specification. The porosity of the negative electrode active material coating on the electrode plate can be controlled by adjusting the particle size of the negative electrode active material and the pressure in a cold pressing procedure.

In some embodiments, the negative electrode active material layer includes the negative electrode active material, optionally, the Dv50 of the negative electrode active material is shown as D_{V}≥6µm, and further optionally, the D_{V}50 of the negative electrode active material is 15-20 µm. The first additive and the second additive will form an SEI film with a certain thickness on the surface of the negative electrode plate, so that the contact area of the negative electrode active material and the electrolyte solution can be reduced by increasing the volume particle size of the negative electrode material, the surface side reaction of the negative electrode is reduced, and therefore, the cycle and storage performance of the battery cell is improved.

In the present application, the volume average particle size Dv50 of the negative electrode active material has known meaning in the art and can be determined by known instruments and methods in the art. For example, determination can be carried out by a laser ash density analyzer (such as Master Size 3000) with reference to a particle size distribution laser diffraction method in GB/T 19077-2016.

In some embodiments, the negative electrode film layer optionally includes the binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other adjuvants, for example, a thickener (such as sodium carboxymethyl cellulose (CMC-Na)).

In some embodiments, the negative electrode plate may be prepared by: dispersing the above components, such as the negative electrode active material, the conductive agent, the binder and any other component, for preparing the negative electrode plate in a solvent (such as deionized water) to form a negative electrode slurry; and coating the negative electrode slurry on the negative electrode current collector, and performing drying and cold pressing processes to obtain the negative electrode plate.

### [Separator]

In some embodiments, the secondary battery further comprises a separator. The type of the separator is not particularly limited in the present application, and any well-known separator with a porous structure having good chemical stability and mechanical stability can be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the positive electrode plate, the negative electrode plate, and the separator can be made into an electrode assembly by a winding process or a lamination process.

In some embodiments, the secondary battery can comprise an outer package. The outer packaging can be used for encapsulating the above electrode assembly and electrolyte.

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic can include polypropylene, polybutylene terephthalate, polybutylene succinate, etc.

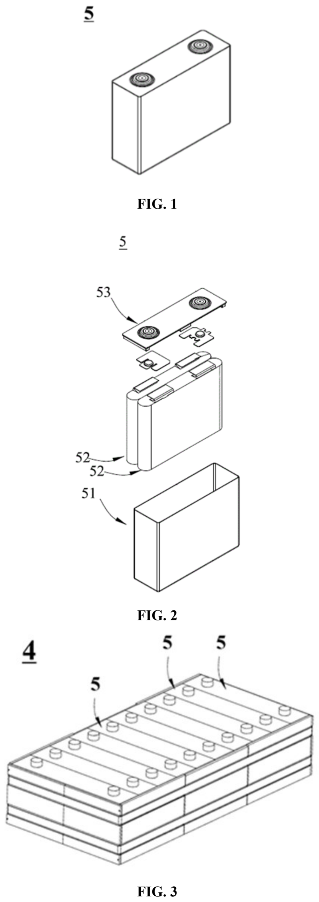

The shape of the secondary battery is not particularly limited in the present application, and may be a cylinder, a square, or any other shape. For example, FIG. 1 shows a secondary battery 5 with a square structure as an example.

In some embodiments, referring to FIG. 2, the outer package may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode sheet, the negative electrode sheet, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art according to the application and capacity of the battery module.

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further comprise a shell having an accommodating space, in which the plurality of secondary batteries 5 is accommodated.

In some embodiments, the above battery modules may be further assembled into a battery pack, the number of battery modules included in the battery pack may be one or more, and the specific number may be selected by those skilled in the art based on the application and capacity of the battery pack.

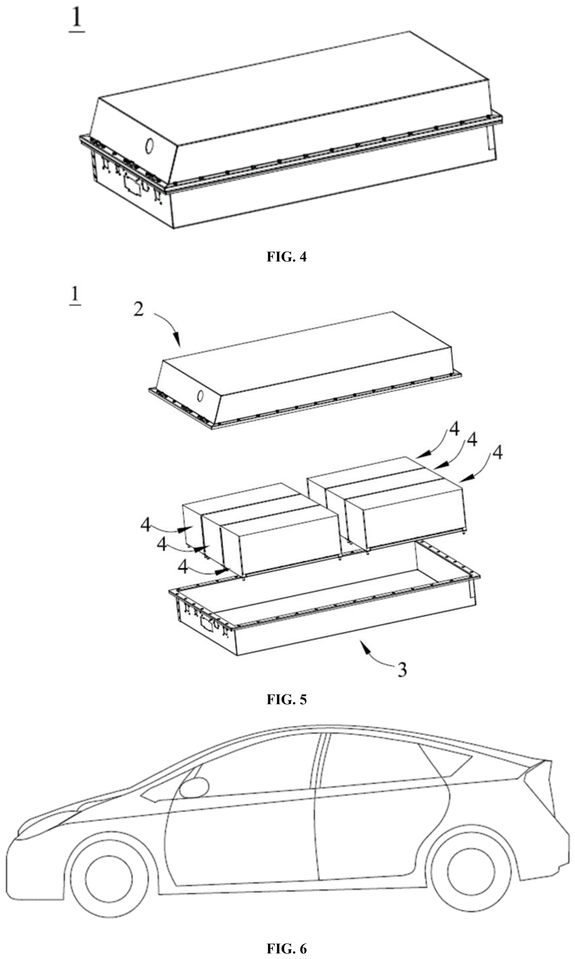

Figs. 4 and 5 show a battery pack 1 as an example. Referring to FIGs. 4 and 5, the battery pack 1 may comprise a battery box and a plurality of battery modules 4 provided in the battery box. The battery box comprises an upper box body 2 and a lower box body 3, wherein the upper box body 2 can cover the lower box body 3 to form an enclosed space for accommodating the battery module 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may comprise, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

Fig. 6 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

### Examples

Examples of the present application will be described below. The embodiments described below are illustrative and only used to explain the present application, and cannot be construed as limiting the present application. If the specific technology or conditions are not indicated in the embodiments, the technology or conditions described in the literature in the art or in accordance with the product specification shall be followed. If the manufacturer of the agents or instruments used is not indicated, they are all conventional products that can be obtained through commercial purchase, and the rest of the agents or compound information are recorded in Table 1.

**Table 1**

| Materials | Structural formula | CAS No. |
|---|---|---|
| 1,6-dideoxygalactitol | 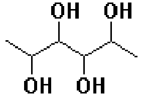 | 25289-20-7 |
| 3,4,5,6-octaerythriol | 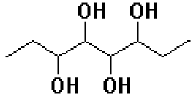 | 2165939-88-6 |
| 2,3,4,5-heptaerythriol | 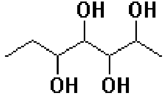 | 2629309-49-3 |
| 1,2,3,4,5.6-heptahexanol | 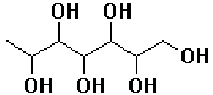 | 688007-16-1 |
| Octitol | 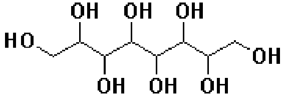 | 63976-32-9 |
| Compound 12 | 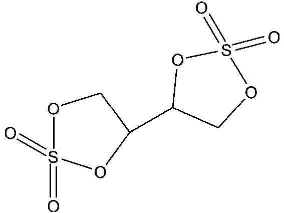 | 1431298-10-0 |
| Compound 13 | 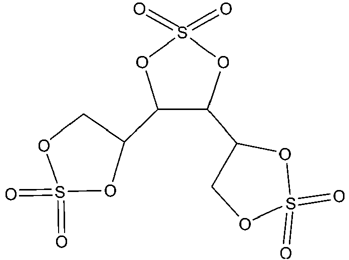 | 2793408-99-6 |

### Synthesis example 1: Synthesis of compound 1

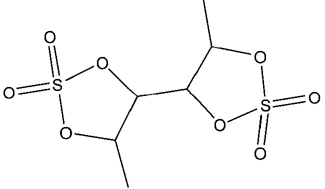

Step 1: adding 300 g (2 mol) of solid 1,6-dideoxygalactitol to a 2L three-necked flask; starting stirring; adding dropwise 523 g (4.4 mol) of thionyl chloride to the three-necked flask, in which, the temperature was controlled at about 15°C in the adding dropwise process; reacting at temperature maintained at 45°C for 4 h after adding dropwise, in which, a large amount of pasty solids were separated out from the reaction liquid; slowly adding dropwise 1L of deionized water after cooling; quickly stirring and scattering the reaction system; pulping and washing the solids obtained by filtering with deionized water for multiple times until the pH was neutral; and drying the filter cake at 60°C under reduced pressure to obtain an intermediate product.

Step 2: adding 184.2 g (0.8 mol) of an intermediate product 1 to a 3L three-necked flask; adding 1000 mL of acetonitrile; adding 80 mg of a ruthenium trichloride trihydrate catalyst; cooling the system to 20°C after nitrogen replacement; starting stirring; adding dropwise 2000 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain a white solid powder, namely the compound 1. 1H-NMR, CD₃CN, δ ppm 5.42-5.39 (m, 2H), 5.36-5.34 (m, 2H), 1.67-1.65 (d, 6H).

### Synthesis example 2: Synthesis of compound 2

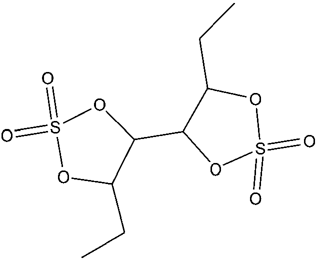

Step 1: adding 356.5 g (2 mol) of solid 3,4,5,6-octaerythriol to a 2L three-necked flask; starting stirring; adding dropwise 523 g (4.4 mol) of thionyl chloride to the three-necked flask, in which, the temperature was controlled at about 15°C in the adding dropwise process; reacting at temperature maintained at 45°C for 4 h after adding dropwise, in which, a large amount of pasty solids were separated out from the reaction liquid; slowly adding dropwise 1 L of deionized water after cooling; quickly stirring and scattering the reaction system; pulping and washing the solids obtained by filtering with deionized water for multiple times until the pH was neutral; and drying the filter cake at 60°C under reduced pressure to obtain the intermediate product.

Step 2: adding 216.2 g (0.8 mol) of the intermediate product 1 to a 3L three-necked flask; adding 1000 mL of acetonitrile; adding 80 mg of a ruthenium trichloride trihydrate catalyst; cooling the system to 20°C after nitrogen replacement; starting stirring; adding dropwise 2000 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain the compound 2.

### Synthesis example 3: Synthesis of compound 3

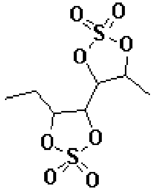

Step 1: adding 328.4 g (2 mol) of solid 2,3,4,5-heptaerythriol to a 2L three-necked flask; starting stirring; adding dropwise 523 g (4.4 mol) of thionyl chloride to the three-necked flask, in which, the temperature was controlled at about 15°C in the adding dropwise process; reacting at temperature maintained at 45°C for 4 h after adding dropwise, in which, a large amount of pasty solids were separated out from the reaction liquid; slowly adding dropwise 1 L of deionized water after cooling; quickly stirring and scattering the reaction system; pulping and washing the solids obtained by filtering with deionized water for multiple times until the pH was neutral; and drying the filter cake at 60°C under reduced pressure to obtain the intermediate product.

Step 2: adding 205 g (0.8 mol) of the intermediate product 1 to a 23 three-necked flask; adding 1000 mL of acetonitrile; stirring until the solid is completely dissolved; adding 80 mg of a ruthenium trichloride trihydrate catalyst; cooling the system to 20°C after nitrogen replacement; starting stirring; adding dropwise 2000 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain the compound 3 (163.1 g, yield: 82.8%).

### Synthesis example 4: Synthesis of compound 4

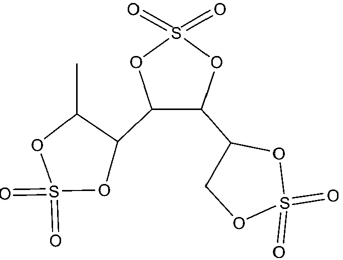

Step 1: adding 392.4 g (2 mol) of solid 1,2,3,4,5.6-heptahexanol to a 2L three-necked flask; starting stirring; adding dropwise 784.5 g (6.6 mol) of thionyl chloride to the three-necked flask, in which, the temperature was controlled at about 15°C in the adding dropwise process; reacting at temperature maintained at 45°C for 4 h after adding dropwise, in which, a large amount of pasty solids were separated out from the reaction liquid; slowly adding dropwise 1 L of deionized water after cooling; quickly stirring and scattering the reaction system; pulping and washing the solids obtained by filtering with deionized water for multiple times until the pH was neutral; and drying the filter cake at 60°C under reduced pressure to obtain the intermediate product.

Step 2: adding 140 g (0.4 mol) of the intermediate product 1 to a 4L three-necked flask; adding 1000 mL of acetonitrile; adding 110 mg of a ruthenium trichloride trihydrate catalyst; cooling the system to 20°C after nitrogen replacement; starting stirring; adding dropwise 1500 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain the compound 4.

### Synthesis example 5: Synthesis of compound 5

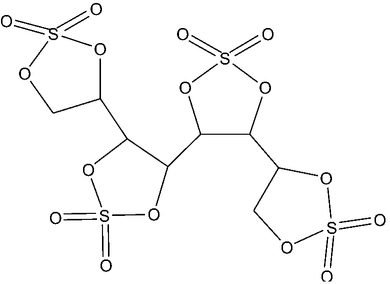

Step 1: adding 484 g (2 mol) of solid octitol to a 2L three-necked flask; starting stirring; adding dropwise 1046 g (8.8 mol) of thionyl chloride to the three-necked flask, in which, the temperature was controlled at about 15°C in the adding dropwise process; reacting at temperature maintained at 45°C for 4 h after adding dropwise, in which, a large amount of pasty solids were separated out from the reaction liquid; slowly adding dropwise 1 L of deionized water after cooling; quickly stirring and scattering the reaction system; pulping and washing the solids obtained by filtering with deionized water for multiple times until the pH was neutral; and drying the filter cake at 60°C under reduced pressure to obtain the intermediate product.

Step 2: adding 183.2 g (0.4 mol) of the intermediate product to a 4L three-necked flask; adding 1000 mL of acetonitrile; adding 150 mg of a ruthenium trichloride trihydrate catalyst; cooling the system to 20°C after nitrogen replacement; starting stirring; adding dropwise 2000 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain the compound 5.

In addition, the synthesis method of the following compounds refers to the Synthesis Example 1, and a corresponding substrate in Table 2 was adopted to replace 1,6-dideoxygalactitol.

**Table 2**

| Compound | Chemical formula | Substrate | Compound LC-MS |
|---|---|---|---|
| 6 | 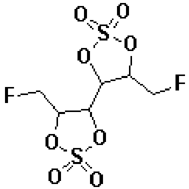 | 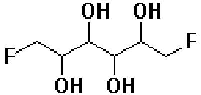 CAS No. : 35827-51-1 | 310.25 |
| 7 | 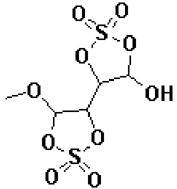 | 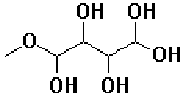 CAS No. : 113421-87-7 | 292.24 |
| 8 | 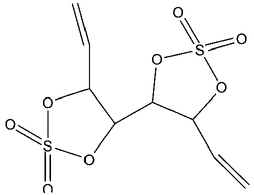 | 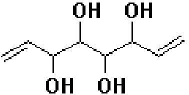 CAS No. : 301523-44-4 | 298.29 |
| 9 | 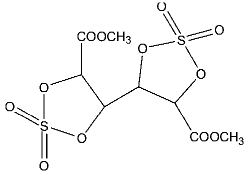 | 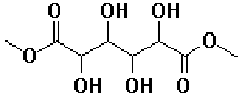 CAS No. : 24808-45-5 | 362.34 |
| 10 | 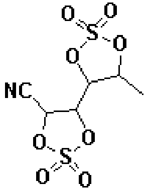 | 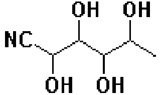 CAS No. : 7460-93-7 | 285.25 |
| 11 | 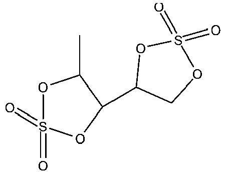 | 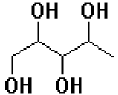 CAS No. : 25289-19-4 | 260.24 |

In addition, the second additives in the examples are listed in Table 3.

**Table 3**

| No. | Structure | No. | Structure |
|---|---|---|---|
| Compound 14 | 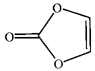 | Compound 20 | 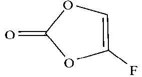 |
| Compound 15 | 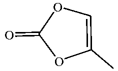 | Compound 21 | 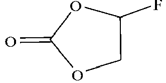 |
| Compound 16 | 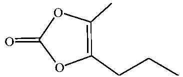 | Compound 22 | 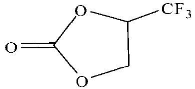 |
| Compound 17 | 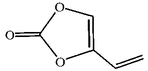 | Compound 23 | 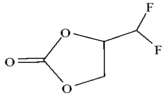 |
| Compound 18 | 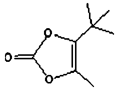 | Compound 24 | 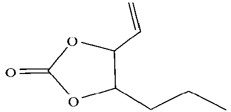 |
| Compound 19 | 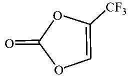 | Compound 25 | 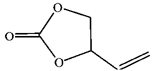 |

### Example 1

### Preparation of secondary battery:

Composition of electrolyte solution: the compound 1 was used as a first additive, and had the mass content in the electrolyte solution of 2%; the compound 14 was used as the second additive, and had the mass content in the electrolyte solution of 2%; and lithium hexafluorophosphate LiPF₆ was used as the electrolyte, and had the mass content in the electrolyte solution of 10%; and a mixture of EC + EMC (ethylene carbonate + methyl ethyl carbonate) in a volume ratio of 3:7 was used as a solvent.

### Preparation of positive electrode plate:

A positive electrode active material lithium iron phosphate (LiFePO₄), a conductive agent acetylene black, and a binder polyvinylidene fluoride (PVDF) were dissolved in a solvent N-methyl pyrrolidone (NMP) according to a weight ratio of 90:5:5, and were fully stirred and mixed uniformly to obtain positive electrode slurry; then the positive electrode slurry was uniformly coated on a positive electrode current collector; and then drying, cold pressing and slitting were carried out to obtain the positive electrode plate.

### Preparation of negative electrode plate:

A negative electrode active material graphite, a conductive agent carbon black, a binder butadiene styrene rubber (SBR) and a thickener sodium carboxymethyl cellulose (CMC-Na) were dissolved in deionized water according to a weight ratio of 90:4:4:2, and were mixed uniformly to prepare negative electrode slurry; and the negative electrode slurry was uniformly coated on copper foil of a negative electrode current collector once or multiple times, and drying, cold pressing and slitting were carried out to obtain the negative electrode plate. The porosity of the negative electrode film layer was 40%, and the D_{V}50 of the used graphite was 18 µm.

### Separator:

A conventional polypropylene film was used as the separator.

### Assembling of lithium-ion battery:

The positive electrode plate, the separator and the negative electrode plate were sequentially stacked, the separator was positioned between the positive electrode plate and the negative electrode plate to play a separating role, and then the positive electrode plate, the isolating film and the negative electrode plate were wound to obtain an electrode assembly; and the electrode assembly was placed in a battery shell, the electrolyte solution was injected after drying, and then the lithium-ion battery was manufactured by processes such as formation and standing.

In the Example 1 to the Example 42, and the Contrast Example 1 to the Contrast Example 2, the substance or dosage of the first additive and the substance or dosage of the second additive in the electrolyte solution are recorded in Table 4, and the rest is the same as that in the Example 1.

**Table 4**

| | First additive | Content W1(%) | Second additive | Content W2(%) | W1/W2 |
|---|---|---|---|---|---|
| Example 1 | Compound 1 | 2 | Compound 14 | 2 | 1 |
| Example 2 | Compound 2 | 2 | Compound 14 | 2 | 1 |
| Example 3 | Compound 3 | 2 | Compound 14 | 2 | 1 |
| Example 4 | Compound 4 | 2 | Compound 14 | 2 | 1 |
| Example 5 | Compound 5 | 2 | Compound 14 | 2 | 1 |
| Example 6 | Compound 6 | 2 | Compound 14 | 2 | 1 |
| Example 7 | Compound 7 | 2 | Compound 14 | 2 | 1 |
| Example 8 | Compound 8 | 2 | Compound 14 | 2 | 1 |
| Example 9 | Compound 9 | 2 | Compound 14 | 2 | 1 |
| Example 10 | Compound 10 | 2 | Compound 14 | 2 | 1 |
| Example 11 | Compound 11 | 2 | Compound 14 | 2 | 1 |
| Example 12 | Compound 12 | 2 | Compound 14 | 2 | 1 |
| Example 13 | Compound 13 | 2 | Compound 14 | 2 | 1 |
| Example 14 | Compound 1 | 2 | Compound 15 | 2 | 1 |
| Example 15 | Compound 1 | 2 | Compound 16 | 2 | 1 |
| Example 16 | Compound 1 | 2 | Compound 17 | 2 | 1 |
| Example 17 | Compound 13 | 2 | Compound 15 | 2 | 1 |
| Example 18 | Compound 13 | 2 | Compound 16 | 2 | 1 |
| Example 19 | Compound 13 | 2 | Compound 17 | 2 | 1 |
| Example 20 | Compound 13 | 2 | Compound 18 | 2 | 1 |
| Example 21 | Compound 13 | 2 | Compound 19 | 2 | 1 |
| Example 22 | Compound 13 | 2 | Compound 20 | 2 | 1 |
| Example 23 | Compound 1 | 2 | Compound 21 | 2 | 1 |
| Example 24 | Compound 1 | 2 | Compound 22 | 2 | 1 |
| Example 25 | Compound 1 | 2 | Compound 23 | 2 | 1 |
| Example 26 | Compound 13 | 2 | Compound 21 | 2 | 1 |
| Example 27 | Compound 13 | 2 | Compound 22 | 2 | 1 |
| Example 28 | Compound 13 | 2 | Compound 23 | 2 | 1 |
| Example 29 | Compound 13 | 2 | Compound 24 | 2 | 1 |
| Example 30 | Compound 13 | 2 | Compound 25 | 2 | 1 |
| Example 31 | Compound 1 | 0.01 | Compound 14 | 2 | 0.005 |
| Example 32 | Compound 1 | 0.1 | Compound 14 | 2 | 0.05 |
| Example 33 | Compound 1 | 5 | Compound 14 | 2 | 2.5 |
| Example 34 | Compound 1 | 10 | Compound 14 | 2 | 5 |
| Example 35 | Compound 1 | 20 | Compound 14 | 2 | 10 |
| Example 36 | Compound 1 | 25 | Compound 14 | 2 | 12.5 |
| Example 37 | Compound 1 | 2 | Compound 14 | 0.01 | 200 |
| Example 38 | Compound 1 | 2 | Compound 14 | 0.1 | 20 |
| Example 39 | Compound 1 | 2 | Compound 14 | 5 | 0.4 |
| Example 40 | Compound 1 | 2 | Compound 14 | 10 | 0.2 |
| Example 41 | Compound 1 | 2 | Compound 14 | 20 | 0.1 |
| Example 42 | Compound 1 | 2 | Compound 14 | 25 | 0.08 |
| Contrast Example 1 | Compound 1 | 2 | None | 0 | - |
| Contrast Example 2 | None | 0 | Compound 14 | 2 | - |

The porosity of the negative electrode film layer and the Dv50 of the used negative electrode material in the Example 43 to the Example 52 are recorded in Table 5, and the rest is the same as that in the Example 1.

**Table 5**

| | Porosity of negative electrode film laver (%) | Negative electrode active material D_{V}50 (µm) |
|---|---|---|
| Example 43 | 25 | 18 |
| Example 44 | 30 | 18 |
| Example 45 | 37 | 18 |
| Example 46 | 42 | 18 |
| Example 47 | 45 | 18 |
| Example 48 | 48 | 18 |
| Example 49 | 40 | 6 |
| Example 50 | 40 | 15 |
| Example 51 | 40 | 20 |
| Example 52 | 40 | 22 |

### Performance test:

### 1. Cycling performance test

At 25°C, a lithium-ion battery was charged to 3.65 V at constant current of 0.5 C, and then charged at constant voltage of 3.65 until the current was less than 0.05 C, and then the lithium-ion battery was discharged to 2.5 V at constant current of 0.5 C, which was a charge-discharge process. The charge and discharge process was repeated, and therefore, the number of cycles of the lithium-ion battery after attenuating to 80% could be calculated.

### 2. Storage performance test

At 25°C, the prepared lithium-ion secondary battery was charged to 3.65 V at constant current of 0.33 C, and further charged at constant voltage of 3.65 V until the current was 0.05 C, and then the lithium-ion secondary battery was discharged to 2.5 V at constant current of 0.33 C, and the discharge capacity C0 in this process was the discharge capacity of the lithium-ion secondary battery before high-temperature storage; and then the lithium-ion secondary battery was charged to 3.65 V at constant current of 0.33 C, and charged at constant voltage of 3.65 V until the current was 0.05 C, and thus the lithium-ion battery was fully charged. The battery was placed in a drying oven at 60°C for 30 d, then taken out, and placed in an environment at 25°C for discharging at 0.33 C, and the discharge capacity was recorded as C1; capacity retention ratio = (C1/C0)×100%.

### 3. Volume expansion ratio test

At 25°C, the prepared lithium-ion secondary battery was charged to 3.65 V at constant current of 0.33 C, and further charged at constant voltage of 3.65 V until the current was 0.05 C, and then the lithium-ion secondary battery was discharged to 2.5 V at constant current of 0.33 C, and the discharge capacity in this process was the discharge capacity of the lithium-ion secondary battery before high-temperature storage; and then the lithium-ion secondary battery was charged to 3.65 V at constant current of 0.33 C, and charged at constant voltage of 3.65 V until the current was 0.05 C, and thus the lithium ion battery was fully charged. The volume of the battery was tested by a drainage method. Then the lithium-ion battery was stored for 60 d at 60°C; and after the storage was finished, the lithium-ion secondary battery was placed in an environment of 25°C, and the volume of the battery was tested by the drainage method. Battery volume expansion ratio = (volume after storage/volume before storage-1)%.

The test result is recorded in Table 6.

**Table 6**

| | Cycling performance (cycles) | Storage performance | Volume expansion ratio |
|---|---|---|---|
| Example 1 | 3509 | 93.1% | 2.2% |
| Example 2 | 3496 | 92.5% | 2.7% |
| Example 3 | 3491 | 92.0% | 3.1% |
| Example 4 | 3507 | 92.9% | 2.0% |
| Example 5 | 3474 | 91.4% | 3.8% |
| Example 6 | 3019 | 85.3% | 5.2% |
| Example 7 | 2899 | 83.5% | 6.3% |
| Example 8 | 2953 | 84.6% | 5.7% |
| Example 9 | 2883 | 83.1% | 6.6% |
| Example 10 | 2830 | 82.7% | 7.0% |
| Example 11 | 2849 | 82.9% | 6.7% |
| Example 12 | 3486 | 92.9% | 2.4% |
| Example 13 | 3492 | 93.0% | 2.3% |
| Example 14 | 3432 | 92.6% | 2.7% |
| Example 15 | 3390 | 91.2% | 3.3% |
| Example 16 | 3401 | 91.7% | 2.9% |
| Example 17 | 3422 | 92.4% | 2.8% |
| Example 18 | 3380 | 91.0% | 3.5% |
| Example 19 | 3392 | 91.5% | 3.1% |
| Example 20 | 3324 | 89.3% | 3.9% |
| Example 21 | 3265 | 87.1% | 4.7% |
| Example 22 | 3296 | 88.5% | 4.2% |
| Example 23 | 3411 | 92.3% | 3.0% |
| Example 24 | 3325 | 90.7% | 4.1% |
| Example 25 | 3382 | 91.5% | 3.7% |
| Example 26 | 3394 | 92.2% | 2.9% |
| Example 27 | 3308 | 90.6% | 4.0% |
| Example 28 | 3365 | 91.4% | 3.6% |
| Example 29 | 3376 | 91.8% | 3.2% |
| Example 30 | 3354 | 91.6% | 3.4% |
| Example 31 | 3234 | 89.8% | 4.1% |
| Example 32 | 3356 | 91.2% | 2.8% |
| Example 33 | 3474 | 92.5% | 2.2% |
| Example 34 | 3401 | 91.9% | 2.1% |
| Example 35 | 3323 | 90.2% | 2.0% |
| Example 36 | 3106 | 87.1% | 2.0% |
| Example 37 | 3117 | 89.2% | 3.9% |
| Example 38 | 3245 | 91.7% | 2.8% |
| Example 39 | 3423 | 92.3% | 2.4% |
| Example 40 | 3301 | 91.2% | 2.7% |
| Example 41 | 3212 | 90.4% | 3.4% |
| Example 42 | 3103 | 87.5% | 4.9% |
| Example 43 | 3201 | 90.5% | 4.2% |
| Example 44 | 3317 | 91.2% | 3.1% |
| Example 45 | 3432 | 92.4% | 2.6% |
| Example 46 | 3465 | 92.6% | 2.5% |
| Example 47 | 3343 | 91.5% | 3.0% |
| Example 48 | 3129 | 89.7% | 3.7% |
| Example 49 | 3301 | 90.8% | 3.6% |
| Example 50 | 3417 | 92.2% | 2.7% |
| Example 51 | 3478 | 92.8% | 2.4% |
| Example 52 | 3321 | 91.2% | 3.1% |
| Contrast Example 1 | 2491 | 87.2% | 7.7% |
| Contrast Example 2 | 2407 | 86.4% | 8.1% |

By comparing the data in Table 6, it can be found that when different first additives are used with the same second additive, there are improvement effects on the cycling performance and storage performance of the battery, but the degree of improvement is different. According to the data comparison of the Example 1, and the Example 31 to the Example 42, it can be found that the dosage of the first additive and the second additive and the proportion of the two will affect the improvement effect of the cycling performance and storage performance of the battery, especially when W1/W2 is 0.05-5, the cycling performance, storage performance and volume expansion ratio of the battery can be significantly improved. By comparing the data the Example 43 the Example 52, it can be found that the porosity of the negative electrode film layer on the negative electrode and the D_{V}50 of the negative electrode active material have an impact on the improvement of the cycling performance, storage performance and volume expansion ratio of the battery.

Although the present application is described with reference to the preferred embodiments, without departing from the scope of the present application, various improvements may be made to it and parts therein may be replaced with equivalents. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A non-aqueous electrolyte solution, comprising additives, wherein the additives comprise a first additive and a second additive, and the first additive is any one or more cyclic sulfate compounds having a structure shown in a general formula (I), 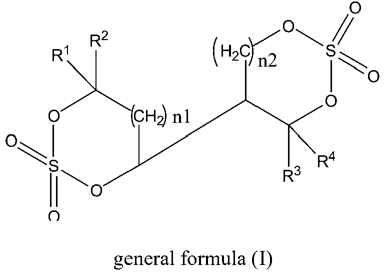
wherein R¹, R², R³ and R⁴ are independently selected from any one of groups having the structure shown in a general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups; nl and n2 are each any integer from 0 to 2 independently;
the general formula (II) is 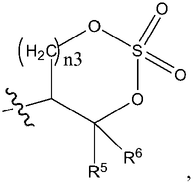
R⁵ and R⁶ are independently selected from any one of groups having the structure shown in the general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups; n3 is any integer from 0 to 2;
the second additive comprises any one or more cyclic carbonate compounds having a structure shown in a general formula (III) or general formula (IV), 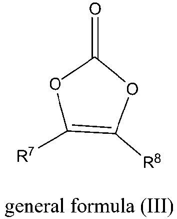
in the general formula (III), R⁷ and R⁸ are independently selected from any one of hydrogen atoms, halogen atoms, C1-C6 alkyl groups, C1-C6 haloalkyl groups, C1-C6 alkoxy groups, C2-C6 alkene groups, C2-C6 alkynyl groups, *R¹³-O-R¹⁴, and *=CR¹⁵R¹⁶; R¹³ is C1-C6 alkylene groups, C1-C6 haloalkylene groups, C2-C6 alkenylene groups, and C2-C6 alkynylene groups; R¹⁴, R¹⁵ and R¹⁶ are independently any one of hydrogen atoms, halogen atoms, C1-C6 alkyl groups, C1-C6 haloalkyl groups, C2-C6 alkene groups, and C2-C6 alkynyl groups; and * represents a connection site; 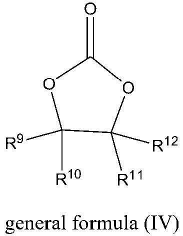
in the general formula (IV), R⁹, R¹⁰, R¹¹, and R¹² are independently selected from any one of hydrogen atoms, halogen atoms, C1-C6 alkyl groups, C1-C6 haloalkyl groups, C1-C6 alkoxy groups, C2-C6 alkene groups, C2-C6 alkynyl groups, *R¹³-O-R¹⁴, and *=CR¹⁵R¹⁶; R¹³ is C1-C6 alkylene groups, C1-C6 haloalkylene groups, C2-C6 alkenylene groups, and C2-C6 alkynylene groups; R¹⁴, R¹⁵, and R¹⁶ are independently any one of hydrogen atoms, halogen atoms, C1-C6 alkyl groups, C1-C6 haloalkyl groups, C2-C6 alkene groups, and C2-C6 alkynyl groups; * represents the connection site; and R⁹, R¹⁰, R¹¹, and R¹² are not the hydrogen atoms at the same time.

2. The non-aqueous electrolyte solution according to claim 1, wherein R¹ and R² are not hydrogen atoms at the same time, and R³ and R⁴ are not hydrogen atoms at the same time;
or, R¹, R², R³, R⁴, R⁵ and R⁶ meet the following conditions:
R¹ and R² are hydrogen atoms at the same time, one of R³ and R⁴ is the hydrogen atoms, and the other one is any one of groups having the structure shown in the general formula (II), halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups; and R⁵ and R⁶ in the groups having the structure shown in the general formula (II) are not hydrogen atoms at the same time;
or, R¹, R², R³, R⁴, R⁵ and R⁶ meet the following conditions:
R³ and R⁴ are hydrogen atoms at the same time, one of R¹ and R² is the hydrogen atoms, and the other one is any one of groups having the structure shown in the general formula (II), halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups; and R⁵ and R⁶ in the groups having the structure shown in the general formula (II) are not hydrogen atoms at the same time.

3. The non-aqueous electrolyte solution according to claim 1 or 2, wherein the cyclic sulfate compound has the structure shown in a general formula (I-1), 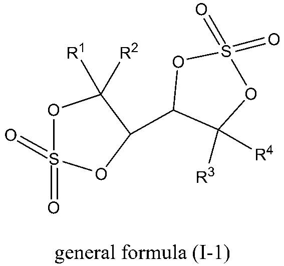
R¹, R², R³ and R⁴ are independently selected from any one of groups having the structure shown in a general formula (II-1), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;
the general formula (II-1) is 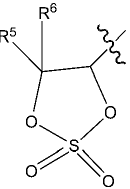
R⁵ and R⁶ are independently selected from any one of groups having the structure shown in the general formula (II-1), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups.

4. The non-aqueous electrolyte solution according to any one of claims 1 to 3, wherein
R¹, R², R³, R⁴, R⁵ and R⁶ are independently selected from any one of groups having the structure shown in the general formula (II-1), hydrogen atoms, halogen atoms, C1-C3 alkyl groups, C1-C3 haloalkyl groups, C1-C3 alkoxy groups, C1-C3 haloalkoxy groups, C2-C3 alkene groups, C1-C3 ester groups, cyano groups, and sulfonic acid groups;
optionally, R¹, R², R³, R⁴, R⁵ and R⁶ are independently selected from any one of groups having the structure shown in the general formula (II-1), hydrogen atoms, halogen atoms, C1-C3 alkyl groups, and C1-C3 haloalkyl groups;
optionally, R¹, R², R³, R⁴, R⁵ and R⁶ are independently selected from any one of groups having the structure shown in the general formula (II-1), hydrogen atoms, F atoms, Cl atoms, Br atoms, methyl groups, ethyl groups, propyl groups, and isopropyl groups;
optionally, the groups having the structure shown in the general formula (II-1) are selected from any one of the following groups: 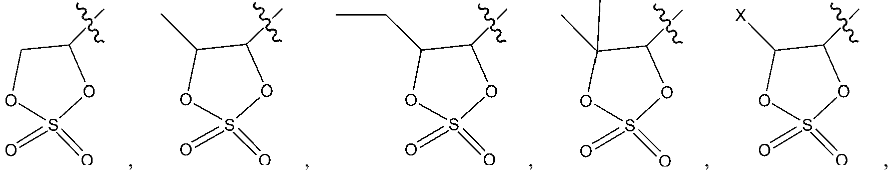 and 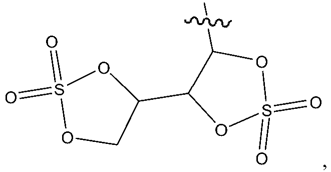 in which, X refers to F atoms, Cl atoms or Br atoms;
optionally, R¹, R², R³ and R⁴ are independently selected from any one of 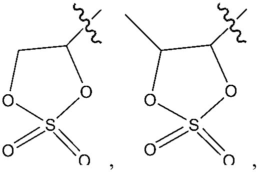 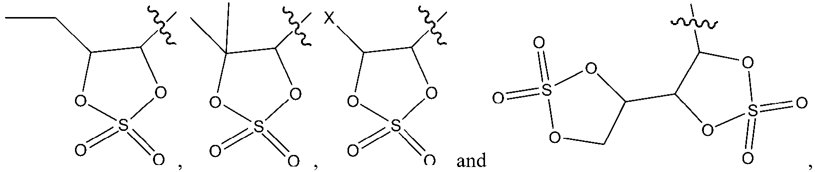 hydrogen atoms, F atoms, Cl atoms, Br atoms, methyl groups, ethyl groups, propyl groups, and isopropyl groups; and X refers to F atoms;
further optionally, R¹, R², R³ and R⁴ are independently selected from any one of 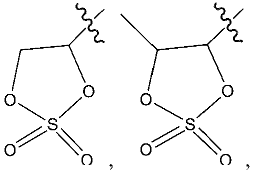 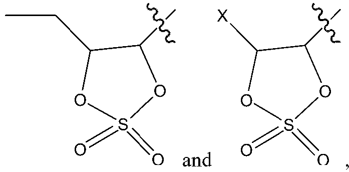 hydrogen atoms, methyl groups and ethyl groups; and X refers to F atoms.

5. The non-aqueous electrolyte solution according to claim 1, wherein the cyclic sulfate compound is selected from any one or more of the following compounds:

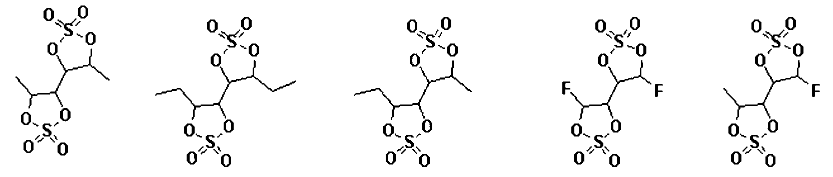

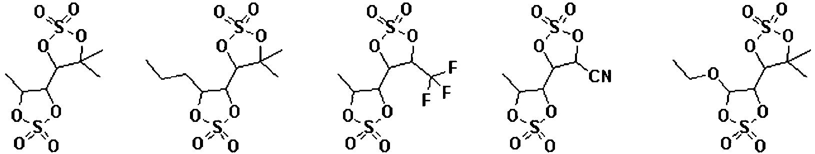

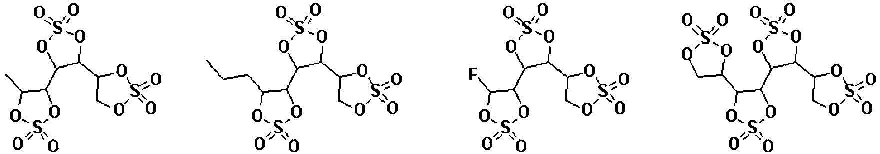

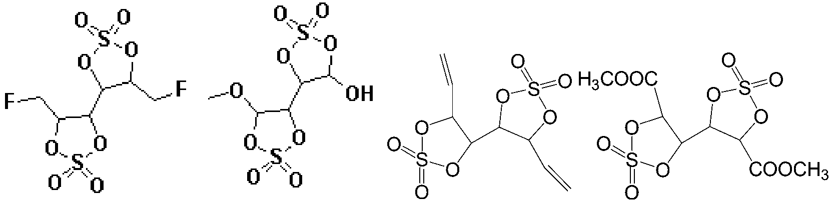

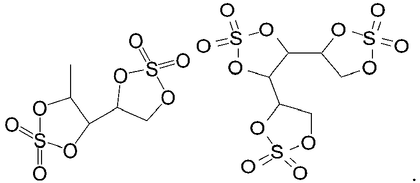

6. The non-aqueous electrolyte solution according to any one of claims 1 to 5, wherein R⁷ and R⁸ are independently selected from any one of hydrogen atoms, halogen atoms, C1-C4 alkyl groups, C1-C4 haloalkyl groups, C1-C4 alkoxy groups, C2-C4 alkene groups, and C2-C4 alkynyl groups;
optionally, R⁷ and R⁸ are independently selected from any one of hydrogen atoms, halogen atoms, C1-C4 alkyl groups, C1-C4 haloalkyl groups, and C2-C4 alkene groups;
optionally, Rand R⁸ are independently selected from any one of hydrogen atoms, halogen atoms, methyl groups, ethyl groups, n-propyl groups, isopropyl groups, n-butyl groups, isobutyl groups, halomethyl groups, haloethyl groups, halopropyl groups, vinyl groups, and propylene groups;
optionally, R⁷ and R⁸ are independently selected from any one of hydrogen atoms, halogen atoms, methyl groups, ethyl groups, n-propyl groups, isopropyl groups, halomethyl groups, haloethyl groups, and vinyl groups;
optionally, the halogen atoms are F atoms, and Cl atoms, and further optionally, F atoms;
optionally, the cyclic sulfate compound having the general formula (III) is selected from any one or more of the following compounds:

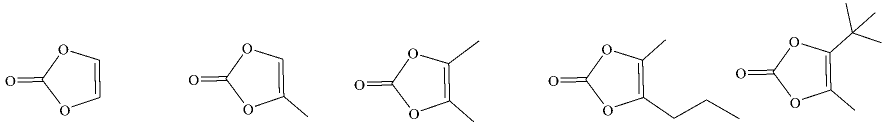

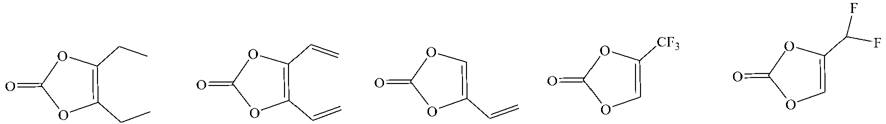

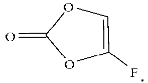

7. The non-aqueous electrolyte solution according to any one of claims 1 to 6, wherein R⁹, R¹⁰, R¹¹ and R¹² are independently selected from any one of hydrogen atoms, halogen atoms, C1-C4 alkyl groups, C1-C4 haloalkyl groups, C1-C4 alkoxy groups, C2-C4 alkene groups, C2-C4 alkynyl groups, *R¹³-O-R¹⁴, *=CR¹⁵R¹⁶; R¹³ is C1-C4 alkylene groups, C1-C4 haloalkylene groups, C2-C4 alkenylene groups, and C2-C4 alkynylene groups; and R¹⁴, R¹⁵, and R¹⁶ are independently any one of hydrogen atoms, C1-C4 alkyl groups, C1-C4 haloalkyl groups, C2-C4 alkene groups, and C2-C4 alkynyl groups;
optionally, R⁹, R¹⁰, R¹¹, and R¹² are independently selected from any one of hydrogen atoms, halogen atoms, C1-C4 alkyl groups, C1-C4 haloalkyl groups, C2-C4 alkene groups, C2-C4 alkynyl groups, *R¹³-O-R¹⁴, and *=CR¹⁵R¹⁶; R¹³ is C1-C4 alkylene groups, C2-C4 alkenylene groups, and C2-C4 alkynylene groups; and R¹⁴, R¹⁵, and R¹⁶ are independently any one of hydrogen atoms, halogen atoms, C1-C4 alkyl groups, C2-C4 alkene groups, and C2-C4 alkynyl groups;
optionally, R⁹, R¹⁰, R¹¹ and R¹² are independently selected from any one of hydrogen atoms, halogen atoms, methyl groups, ethyl groups, n-propyl groups, isopropyl groups, halomethyl groups, haloethyl groups, halopropyl groups, vinyl groups, propylene groups, ethynyl groups, propinyl groups, *methylene-O-R¹⁴, *ethylidene-O-R¹⁴, and *=CR¹⁵R¹⁶; R¹⁴ is any one of hydrogen atoms, methyl groups, ethyl groups, vinyl groups, and ethynyl groups; and R^{is} and R¹⁶ are each independently hydrogen atoms or F atoms;
optionally, the halogen atoms are F atoms, and Cl atoms, and further optionally, F atoms;
optionally, the cyclic sulfate compound having the general formula (IV) is selected from any one or more of the following compounds:

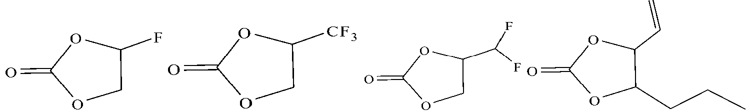

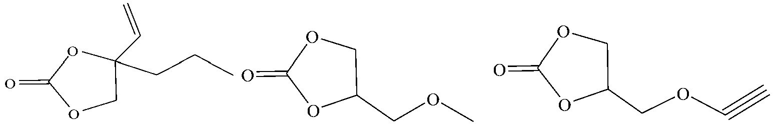

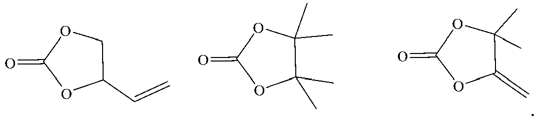

8. The non-aqueous electrolyte solution according to any one of claims 1 to 7, wherein the mass ratio of the first additive in the non-aqueous electrolyte solution is W1, optionally, the W1 is 0.001%-20%, and further optionally, the W1 is 0.1%-5%;
and/or, the mass ratio of the second additive in the non-aqueous electrolyte solution is W2, optionally, the W2 is 0.001%-20%, and further optionally, the W2 is 0.1%-5%; and
optionally, 0.01≤W1/W2≤10, preferably, 0.05≤W1/W2≤5.

9. The non-aqueous electrolyte solution according to any one of claims 1 to 8, further comprising an electrolyte, wherein the electrolyte optionally comprises an alkali metal salt electrolyte; optionally, the electrolyte comprises a lithium salt or a sodium salt; optionally, the lithium salt comprises one or more selected from a group consisting of lithium hexafluorophosphate, lithium perchlorate, lithium hexafluoroarsenate, lithium bis(fluorosulfonyl)imide and lithium bis(trifluoromethanesulfonyl)imide; and the sodium salt comprises one or more selected from a group consisting of sodium hexafluorophosphate, sodium difluoroborate, sodium perchlorate, sodium bis(fluorosulfonyl)imide, sodium bis(trifluoromethanesulfonyl)imide and sodium trifluoromethanesulfonate.

10. The non-aqueous electrolyte solution according to any one of claims 1 to 9, further comprising a non-aqueous solvent, wherein the non-aqueous solvent optionally comprises any one or more selected from a group consisting of cyclic carbonate, chain carbonate, a nitrile solvent, a ketone solvent and a sulfone solvent; and further optionally, the non-aqueous solvent comprises one or more selected from a group consisting of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, ethyl sulfone, tetrahydrofuran, ethylene glycol dimethyl ether, dioxolane, acetone, acetonitrile and butyronitrile.

11. The non-aqueous electrolyte solution according to any one of claims 1 to 10, wherein the additives further comprise one or more selected from a group consisting of a sulfate compound, a sulfite compound, a sultone compound, a disulfonic acid compound, a nitrile compound, an aromatic compound, an isocyanate compound, a phosphazene compound, a cyclic anhydride compound, a phosphite compound, a phosphate compound, a borate compound and a carboxylate compound.

12. A secondary battery, comprising a positive electrode plate, an electrolyte solution, a separator and a negative electrode plate, wherein the electrolyte solution comprises the non-aqueous electrolyte solution according to any one of claims 1 to 11.

13. The secondary battery according to claim 12, wherein the negative electrode plate comprises a negative electrode current collector and a negative electrode film layer arranged on one side or two sides of the negative electrode current collector; and optionally, the porosity of the negative electrode film layer is 30%-45%, optionally, 37-42%; and
the negative electrode film layer comprises a negative electrode active material, optionally, the Dv50 of the negative electrode active material is shown as D_{V}50≥6µm, and further optionally, the D_{V}50 of the negative electrode active material is 15-20 µm.

14. An electrical apparatus, comprising a secondary battery, wherein the secondary battery comprises the secondary battery according to claim 12 or 13.
